# EUROPEAN PATENT SPECIFICATION

(11) **EP 4 639 355 B1**
(45) Date of publication and mention of the grant of the patent: **19.08.2026**
(21) Application number: 23813841.6
(22) Date of filing: 17.11.2023
(51) Int. Cl.: G06F 12/1009, G06F 12/1027

(54) **APPARATUS, METHOD AND COMPUTER PROGRAM, FOR PERFORMING TRANSLATION TABLE ENTRY LOAD/STORE OPERATION**
VORRICHTUNG, VERFAHREN UND COMPUTERPROGRAMM ZUR DURCHFÜHRUNG EINER LADE-/SPEICHEROPERATION EINER ÜBERSETZUNGSTABELLENEINGABE
APPAREIL, PROCÉDÉ ET PROGRAMME INFORMATIQUE POUR EFFECTUER UNE OPÉRATION DE CHARGEMENT/STOCKAGE D'ENTRÉE DE TABLE DE TRADUCTION

(30) Priority: 20.12.2022 GB 202219235
(43) Date of publication of application: 29.10.2025
(73) Proprietor: ARM Limited, Cambridgeshire CB1 9NJ (GB)
(72) Inventor: CHADWICK, Alexander Donald Charles, Cambridge Cambridgeshire CB1 9NJ (GB); RUTLAND, Mark Salling, Cambridge Cambridgeshire CB1 9NJ (GB); GRISENTHWAITE, Richard Roy, Cambridge Cambridgeshire CB1 9NJ (GB)
(74) Representative: D Young & Co LLP
(86) International application number: PCT/GB2023/053026
(87) International publication number: WO 2024/134133

(56) References cited:
- EP-B1- 3 491 520
- GB-A- 2 603 489
- US-A1- 2020 242 047
- US-B2- 11 226 902

## Description

The present technique relates to the field of data processing.

A processing system may perform address translation to translate between an input address space and an output address space based on address mapping information obtained from a translation table structure comprising translation table entries. By supporting address translation, different pieces of software written with conflicting definitions of their input address spaces can be mapped onto a common output address space to resolve any address conflicts between the software. The translation table structure may also specify access permissions or memory region attributes which are used to control access to memory for corresponding regions of address space. US 11 226 902 B2 discloses a method of processing translation load instruction in data processing system, involves ensuring that translation entry containing desired access protection is stored within translation structure of data processing system.

The invention is defined in the appended claims. The dependent claims set out particular embodiments.

At least some examples provide an apparatus comprising: processing circuitry to process instructions; address translation circuitry to translate between an input address space and an output address space based on address mapping information obtained from a translation table structure comprising translation table entries; and translation table entry load/store circuitry to perform, in response to a translation table entry load/store triggering instruction processed by the processing circuitry, a translation table entry load/store operation for at least one target translation table entry address selected depending on software-defined address information identifying a selected address in the input address space, each target translation table entry address comprising an address of a leaf translation table entry providing the address mapping information for translating the selected address from the input address space to the output address space or an address of a branch translation table entry traversed in a translation table walk operation for obtaining the leaf translation table entry providing the address mapping information for translating the selected address; wherein for at least one variant of the translation table entry load/store operation, the translation table entry load/store operation supports, for a given target translation table entry of said at least one target translation table entry, clearing access tracking metadata of the given target translation table entry from a first state to a second state, the first state indicating that at least one load/store access has occurred to a corresponding region of input address space and the second state indicating that no load/store accesses have occurred to the corresponding region of input address space.

At least some examples provide a method comprising: processing instructions using processing circuitry; and translating, using address translation circuitry, between an input address space and an output address space based on address mapping information obtained from a translation table structure comprising translation table entries; and in response to the processing circuitry processing a translation table entry load/store triggering instruction, performing a translation table entry load/store operation for at least one target translation table entry address selected depending on software-defined address information identifying a selected address in the input address space, each target translation table entry address comprising an address of a leaf translation table entry providing the address mapping information for translating the selected address from the input address space to the output address space or an address of a branch translation table entry traversed in a translation table walk operation for obtaining the leaf translation table entry providing the address mapping information for translating the selected address; wherein for at least one variant of the translation table entry load/store operation, the translation table entry load/store operation supports, for a given target translation table entry of said at least one target translation table entry, clearing access tracking metadata of the given target translation table entry from a first state to a second state, the first state indicating that at least one load/store access has occurred to a corresponding region of input address space and the second state indicating that no load/store accesses have occurred to the corresponding region of input address space.

At least some examples provide a computer program comprising instructions for controlling a host data processing apparatus to provide an instruction execution environment for executing target code, the computer program comprising: address translation program logic to translate between an input address space and an output address space based on address mapping information obtained from a translation table structure comprising translation table entries; and translation table entry load/store program logic to perform, in response to a translation table entry load/store triggering instruction of the target code, a translation table entry load/store operation for at least one target translation table entry address selected depending on software-defined address information identifying a selected address in the input address space, each target translation table entry address comprising an address of a leaf translation table entry providing the address mapping information for translating the selected address from the input address space to the output address space or an address of a branch translation table entry traversed in a translation table walk operation for obtaining the leaf translation table entry providing the address mapping information for translating the selected address; wherein for at least one variant of the translation table entry load/store operation, the translation table entry load/store operation supports, for a given target translation table entry of said at least one target translation table entry, clearing access tracking metadata of the given target translation table entry from a first state to a second state, the first state indicating that at least one load/store access has occurred to a corresponding region of input address space and the second state indicating that no load/store accesses have occurred to the corresponding region of input address space.

The computer program may be stored on a storage medium. The storage medium may be a transitory storage medium or a non-transitory storage medium.

Further aspects, features and advantages of the present technique will be apparent from the following description of examples, which is to be read in conjunction with the accompanying drawings, in which:
Figure 1 illustrates an example of a data processing apparatus;
Figure 2 illustrates an example of execution states of the processing circuitry;
Figure 3 illustrates two-stage address translation;
Figures 4 and 5 illustrate an example of translation table walks for stage-1 and stage-2 address translation respectively;
Figure 6 illustrates an example of a branch translation table entry and a leaf translation table entry;
Figure 7 illustrates an example of load and store instructions;
Figure 8 illustrates an example of a translation table entry load instruction and a translation table entry store instruction, which are both examples of translation table entry load/store triggering instructions;
Figure 9 illustrates a method of processing instructions;
Figure 10 illustrates a method of performing a translation table entry load/store operation in response to a translation table entry load/store triggering instruction;
Figure 11 shows an example of translation table entry load/store circuitry;
Figure 12 illustrates an example of a programming interface for the translation table entry load/store circuitry;
Figure 13 illustrates a method of controlling asynchronous processing of the translation table entry load/store operation based on parameters defined in the programming interface; and
Figure 14 illustrates a simulator implementation.

An apparatus has processing circuitry to process instructions; and address translation circuitry to translate between an input address space and an output address space based on address mapping information obtained from a translation table structure comprising translation table entries. In typical instruction set architectures, for software to modify information within translation table entries of such a translation table structure, the software would use general purpose load/store and arithmetic instructions to read the current value of each entry to be modified, determine what the modified value of each entry should be, and write each modified translation table entry back to memory. The load/store instructions used in such updates to translation table structures would normally be general purpose load/store instructions which specify, as the target address of the load/store, the address of the memory location which is to be read/written in the load/store operation. Therefore, when using such load/store instructions for implementing translation table entry updates, this would require software to identify the address of each translation table entry to be updated, prior to performing the load/store on that address. Identifying, in software, the address of the location storing a given translation table entry is often not straightforward, as it may require a software walk of a multi-level translation table structure, which may require the software to carry out, for each translation table entry to be updated, a relatively long sequence of dependent memory accesses merely for identifying the address of the translation table entry which is to be updated. This can be slow and may harm performance particularly when many translation table entries all need to be updated. An example of a scenario where this is a problem is during live migration of a virtual machine from one host processor to another, when the majority of translation table entries associated with the migrated virtual machine may need to be updated during the migration.

In the examples discussed below, translation table entry load/store circuitry performs, in response to a translation table entry load/store triggering instruction processed by the processing circuitry, a translation table entry load/store operation for at least one target translation table entry address selected depending on software-defined address information identifying a selected address in the input address space. Each target translation table entry address comprises an address of a leaf translation table entry providing the address mapping information for translating the selected address from the input address space to the output address space or an address of a branch translation table entry traversed in a translation table walk operation for obtaining the leaf translation table entry providing the address mapping information for translating the selected address.

Hence, the instruction which triggers the load/store operation on the target translation table entry address does not itself need to specify the address of that target translation table entry. Instead, the translation table entry load/store circuitry can identify the target translation table entry to be updated using software-defined address information which identifies a selected address. Rather than triggering a load/store to the selected address itself, the translation table entry load/store circuitry performs a load/store operation to the address of at least one target translation table entry corresponding to that selected address. The at least one target translation table entry may include the leaf target translation table entry which provides the address mapping information for translating the selected address, and/or at least one branch translation table entry which provides a pointer used in the translation table walk for locating the leaf translation table entry. The operation to identify the target translation table entry address based on the selected address may be performed in hardware, rather than needing an explicit set of instructions to be executed in software for walking the translation table entry structure to locate the address of the entry to be updated. This can improve performance for updates to translation table structures.

For at least one variant of the translation table entry load/store operation, the translation table entry load/store operation supports, for a given target translation table entry of said at least one target translation table entry, clearing access tracking metadata of the given target translation table entry from a first state to a second state, the first state indicating that at least one load/store access has occurred to a corresponding region of input address space and the second state indicating that no load/store accesses have occurred to the corresponding region of input address space. One or more items of access tracking metadata may be specified in a given translation table entry, and each item of access tracking metadata could either be tracking load/store accesses in a combined manner (e.g. simply tracking whether any access to the region has occurred, regardless of whether it is a load or a store), or could be specific to tracking either load accesses or store accesses (e.g. tracking store accesses specifically can be useful to identify which regions of address space may be "clean" (not written to) so may not require writing back to another storage device if evicted from the memory device currently storing the data for that address space region). Hence, there can be one or more pieces of access tracking metadata which can be recorded in the translation table structures to allow software to track, on a region by region basis, access patterns in the way in which the memory address space is being accessed.

It is typically the software's responsibility to decide when to clear any access tracking metadata back to an initial state which indicates that no load/store accesses of occurred to the corresponding region of input address space (e.g. this may be done at a start of a period across which access frequency or dirty state tracking information is to be gathered for a certain group of memory regions). In typical instruction set architectures this would require a general purpose load/store instruction of the type discussed above. However, when clearing access tracking metadata, many translation table entries may need their access tracking metadata cleared. Hence, merely clearing the access tracking metadata of the monitored regions of address space to the first state may incur significant performance cost because each entry to be updated may require a software-managed walk of the translation table structures merely to identify the address where the corresponding translation table entries are stored.

Hence, by supporting a translation table entry load/store operation which, in at least one variant, supports clearing of access tracking metadata using an instruction which does not need to specify the address of the translation table entry itself, but can use software-defined address information specifying the selected address for which that entry is used either to translate the selected address itself or to provide a pointer on the path to the leaf translation table entry which translates the selected address, this can improve performance for various software use cases.

In response to the translation table entry load/store triggering instruction, the translation table entry load/store circuitry may control the address translation circuitry to identify the at least one target translation table entry address based on the selected address. For example, the address translation circuitry may comprise translation table walking circuitry which, in response to a given address, can trigger the series of memory accesses needed to walk a translation table structure to identify the address of the translation table entry for translating that given address. The address translation circuitry may also comprise at least one address translation cache which caches information derived from previous translation table walks performed by the translation table walking circuitry. The cached information in the address translation cache could include information identifying mappings between input memory addresses for a translation table walk and translation table entry addresses of corresponding translation table entries used for translating those input memory addresses. Hence, address translation circuitry may typically already have hardware for identifying the address of the target translation table entry which is relevant for managing the translation of a given address of the input address space. That hardware can efficiently be reused for the translation table entry load/store operation to avoid software needing to trigger a translation table walk through a software-specified dependent series of memory accesses. The hardware will typically be much faster than software to perform the translation table walk, and in any case some portions of such translation table walks may be able to be eliminated by the hardware if relevant address information is already stored in an address translation cache. In contrast, a software-managed translation table walk would be unlikely to benefit from such caching and in any case even in the absence of caching would typically be slower than a hardware-managed translation table walk. Therefore, it can be useful to provide, as an architecturally defined operation available for use by software, a translation table entry load/store operation which takes a selected address and triggers a load/store operation on the address of the corresponding translation table entry corresponding to that selected address, with the responsibility for identifying the mapping between the selected address and the translation table entry address being left to the hardware of the address translation circuitry.

There is no need, as a response to the translation table entry load/store triggering instruction, to trigger any load/store operation to the selected address specified by the software-defined address information. Hence, the translation table entry load/store triggering instruction may cause the translation table entry load/store circuitry to trigger a load/store to the at least one target translation table entry address, without triggering any load/store to the selected address itself.

Different implementations may support different variants of the translation table entry load/store operation. Some implementations may only support a single variant, but that variant could be different from one implementation to another. Other implementations may support two or more different variants, with at least one piece of software-defined information distinguishing which particular variant is to be performed in response to a given instance of the translation table entry load/store triggering instruction. For example, the particular variant of the operation to be performed in response to a given instance of the translation table entry load/store triggering instruction could be set by any of the following architectural features:
- A parameter of the translation table entry load/store triggering instruction itself (e.g. an opcode of the instruction, or another instruction field within the encoding of the instruction).
- Presence/absence of a "prefix" instruction executed before the translation table entry load/store triggering instruction, where if present the "prefix" instruction modifies the behaviour of the operation performed in response to a subsequent instance of the translation table entry load/store triggering instruction. The prefix instruction can identify which variant of the operation is to be performed by the subsequent translation table entry load/store triggering instruction. If no prefix instruction is included before the translation table entry load/store triggering instruction, then the translation table entry load/store operation may be performed according to a default variant.

- Control information stored within a register which identifies which variant of the operation is to be performed. The register providing the control information could be, for example, a general purpose register referenced by the instruction, or a predetermined system register which is not explicitly referenced by the instruction.
- Information stored at a given address in memory (e.g. in a memory-mapped register or an entry of a buffer structure referenced based on a base address programmed in software), which can be read by the translation table entry load/store circuitry to identify the variant of the translation table entry load/store operation to be performed.
- Information specified within the selected address defined by the software-defined address information. For example, as the selected address is being used to identify translation table entry, and translation table entries are typically defined on a region-by-region basis, some of the address bits of the selected address may be sub-region bits which merely distinguish different addresses within a region which all correspond to the same translation table entry. Therefore, those sub-region bits are not meaningful for identifying which translation table entry corresponds to the selected address, and so can be reused to encode operation variant information which identifies the variant of the translation table entry load/store operation to be performed for a given instance of the translation table entry load/store triggering instruction.

One way in which variants of the translation table entry load/store operation could differ may be in terms of how to determine which translation table entry is identified as the target translation table entry based on the selected address.

In some implementations, for at least one variant of the translation table entry load/store operation, the at least one translation table entry comprises the leaf translation table entry. In this case, the translation table entry which is loaded or stored by the translation table entry load/store operation may be the entry which provides the address translation mapping for translating the selected address. In such a variant, in addition to allowing clearing of the access tracking metadata, the translation table entry load/store operation may also support updating the leaf translation table entry to change at least one of: the address mapping information for translating the selected address; access permission information indicative of which types of memory access operation are allowed; and memory attribute information for controlling handling of memory accesses to the selected address.

In some implementations, for at least one variant of the translation table entry load/store operation, the at least one translation table entry comprises a translation table entry at a specified level of the translation table structure regardless of whether that translation table entry is the leaf translation table entry or the branch translation table entry. For example, in a translation table structure having a certain maximum number of levels (e.g. 4 levels), it may be possible for leaf translation table entries (which provide an address translation mapping, rather than a pointer to a further translation table providing further translation table entries) to be defined at different levels of the table structure. For example, an entry at level 2 could be encoded as a leaf translation table entry to indicate address mapping information for a larger region of address space than if the entry at level 2 was a branch translation table entry pointing to another translation table, and the leaf translation table entry was defined at level 3. Hence, it is possible to provide a variant of the translation table entry load/store operation where the target translation table entry to be loaded or stored is at a specified level of the translation table structure reached in a translation table walk for the selected address, regardless of whether the entry at that level is a branch or a leaf. This option could be useful, for example, when software wishes to set new translation table information for a given block of memory corresponding to a specified table level, regardless of whether that block of memory was previously defined with common properties for the entire block (using a leaf translation table entry at the specified level) or was sub-divided into smaller blocks (either with different properties, or the same compatible properties (with a branch translation table entry at the specified level pointing to a further table which may define separate entries for each sub-division).

In some implementations, for at least one variant of the translation table entry load/store operation, the at least one translation table entry comprises the leaf translation table entry and each branch translation table entry traversed in the translation table walk operation for obtaining the leaf translation table entry. Hence, this approach can apply the translation table entry load/store operation hierarchically to each translation table entry on the path through the translation table structure traversed in the translation table walk for the selected address, so that loads or stores may be performed to two or more translation table entries in response to the same translation table entry load/store triggering instruction. For example, in some implementations of translation table structures, the access tracking metadata mentioned above may be present at each level of the table, not only in the leaf entries, and so it can be useful to provide a variant of the translation table entry load/store operation which, in a single instruction, may clear the access tracking metadata in the leaf translation table entry corresponding to a selected address and in all the branch translation table entries walked in the path to that leaf translation table entry. Hence, for some variants of the translation table entry load/store operation, based on a single selected address, two or more addresses of corresponding translation table entries may each be subjected to a translation table entry load/store operation.

In some implementations, for at least one variant of the translation table entry load/store operation, the at least one translation table entry comprises: in a case when the leaf translation table entry has been validly defined for the selected address, the leaf translation table entry; and in a case where no valid leaf translation table entry has been defined for the selected address, a final valid branch translation table entry reached in a traversal of the translation table structure for the selected address. Hence, with this approach the entry that is loaded/stored may be the final valid translation table entry able to be reached in a translation table walk for the selected address, regardless of whether that final valid translation table entry is a leaf or branch entry, and regardless of which level of the translation table structure that final valid translation table entry appears at. This can be helpful to software when building new translation table structures, for example.

Another way in which variants of the translation table entry load/store operation can differ can be in what type of load/store operation is performed on a given target translation table entry whose address is identified based on the selected address.

For example, the at least one variant of the translation table entry load/store operation which supports clearing of the access tracking metadata may comprises at least one of:
- a store variant of the translation table entry load/store operation to update the given target translation table entry to an updated value specified by a store data operand. For example, the store variant may write a new value (specified as an operand of the operation) to the memory location corresponding to the address of the given target translation table entry.
- a swap variant of the translation table entry load/store operation to update the given target translation table entry to an updated value specified by a swap data operand and load a software-accessible location with either a pre-update value of the given target translation table entry or a post-update value of the given target translation table entry. This variant can be useful if, in addition to updating the given target translation table entry, a subsequent operation dependent on information within that entry also needs to be performed.
- an atomic compare-and-swap variant of the translation table entry load/store operation to determine whether a result of a comparison between the given translation table entry and a comparison operand satisfies a comparison condition, and in response to determining that the result of the comparison satisfies the comparison condition, update the given target translation table entry based on a swap operand of the compare-and-swap variant. This operation is performed atomically, such that the result of the translation table entry load/store operation is consistent with the result that would occur if the read operation for obtaining the value to compare with the comparison operand and the write for writing the updated value of the given target translation table entry occur with no intervening write to the address of the given target translation table entry between the read and the write of the compare-and-swap.
- an atomic bit update variant of the translation table entry load/store operation to set or clear one or more specified bits of the given translation table entry, the specified bit identified by a bit selection operand (e.g. an index identifying a single bit to update, or a mask identifying for each bit whether that bit should be updated). The bit update could set the one or more specified bits to either 1 or 0, depending on the variant of the operation. In some implementations, the bit update operation may require a read to the address of the given translation table entry followed by a write to that address, as writes may be performed at word granularity greater than a bit and so the read operation may be needed to read the other bits of the same word as the bit(s) to be updated, so that the new value including the updated bit (with other bits still the same as previously read) can be written back. As there may be separate read and write operations involved, again atomicity can be enforced on the bit update operation to ensure that the result is consistent with the result that would occur if there have been no intervening writes to the address of the given target translation table entry between the read and the write of the atomic bit update operation.

For the atomic compare-and-swap variant and the atomic bit update variant, the atomicity can be enforced in different ways, such as by locking the access to the relevant memory location to prevent intervening write operations during the period between the read and write, or by speculatively allowing the read and write to proceed assuming there is no intervening write operation (without locking access to the location), but providing a technique for detecting intervening writes to the location, so that the translation table entry load/store operation can be cancelled and repeated to ensure atomicity if an intervening write was detected.

For each of the store, swap, atomic compare-and-swap and atomic bit update variants described above, these variants may be capable of clearing the access tracking metadata as mentioned above. These variants may also be capable of performing other kinds of updates to translation table entries, such as updating the address mapping information, access permission information or memory attribute information as discussed earlier. The operands of these variants of the translation table entry load/store operation may define the particular value to be written to the target translation table entry, so as to specify which type of information within the entry is to be updated. These variants could also support setting the access tracking metadata to the first state.

The translation table entry load/store circuitry may also, in addition to a variant supporting clearing of access tracking metadata as mentioned earlier, support a load variant of the translation table entry load/store operation to load the at least one target translation table entry to at least one software-accessible register. This can be useful so that the software can use regular arithmetic instructions operating on data stored in the software-accessible register to perform more complex manipulations of the loaded translation table entry. The store or compare-and-swap variant of the translation table entry load/store operation mentioned earlier can later be used to write back the updated value of the translation table entry once those manipulations are complete.

In response to the translation table entry load/store triggering instruction, the translation table entry load/store circuitry is configured to perform an error reporting action in response to identifying that an error condition has occurred, the error condition comprising one of: no valid leaf translation table entry being defined for the selected address; and a valid leaf translation table entry for the selected address being defined at a level of the translation table structure other than an expected level. The expected level may be defined as either an operand of the translation table entry load/store operation, or may be part of the definition of which variant of the operation is being performed.

Providing support for an error response can be useful because sometimes software may request a load/store to a translation table entry using one of the variants of the operation discussed above, but actually the current configuration of the translation table structures may differ from what was expected by the software, so that applying the load/store to the entry returned by that operation might risk an error occurring which could result in inappropriate setting of translation table information.

For example, software might be expecting that a leaf translation table entry is defined for a given address, but if there is no such leaf translation table entry, then applying an update to some other location (e.g. an address that is not a valid translation table entry at all) could risk leakage of information on the address space layout to software processes which might not be trusted to see the mapped addresses. It could also risk other errors in memory access control (e.g. if an updated address mapping intended to be applied to a leaf entry was mistakenly applied to a branch entry, this could cause the mapped address for the intended leaf to instead be treated as a pointer to a further translation table, which may cause subsequent levels of page table walks to give the incorrect result. Similarly, software might expect that it is setting updated information for a given block of memory of a size corresponding to a leaf entry expected for one level of the table, but if the leaf is found at a different level of the table to the expected level, then applying the update at the wrong level may result in the updated information being applied to a memory address region that is smaller or larger than the expected size. Therefore, by providing a mechanism to report errors where no valid leaf is identified for the selected address or the valid leaf is at the wrong level of the translation table structure from the expected level, this can reduce risk of inappropriate setting of translation table information. Also, supporting the error response allows the instructions to be used without needing to use coarse-grained locking structures in software, therefore providing a performance benefit.

The error reporting action can be implemented in a variety of ways. For example, the error reporting action could comprise signalling a fault (raising an exception) which can cause processing of the current software to be interrupted, or setting an error status indication in a register or other storage location which software can read to identify that the error has arisen.

In some examples, in response to the translation table entry load/store triggering instruction, the translation table entry load/store circuitry is configured to update at least one software-accessible register with syndrome information, the syndrome information specifying at least one of: a level of the translation table structure at which a valid leaf translation table entry is defined for the selected address; and information specified by the at least one target translation table entry. For example, the syndrome information can be written to the software-accessible register regardless of whether any error has arisen. Even in an error-free scenario, it may still be useful for software to learn information from the translation table entry which was targeted by the translation table entry load/store operation.

The processing circuitry may support a given instruction set architecture. The translation table entry load/store triggering instruction can be implemented within the instruction set architecture in different ways.

In some examples, the translation table entry load/store triggering instruction specifies the selected address as an operand of the translation table entry load/store triggering instruction, and the translation table entry load/store triggering instruction has a different instruction opcode to a load/store instruction for triggering a load/store operation to be performed for an address specified as an operand of the load/store instruction. The operand defining the selected address could be an immediate operand directly specified in the encoding of the instruction, or could be an operand stored in a register referenced by a register field specified in the encoding of the instruction.

Hence, a dedicated instruction (or multiple dedicated instructions, supporting different variants of the translation table entry load/store operation) may be defined in the instruction set architecture used by the processing circuitry, separate from general purpose load/store instructions which apply their load/store to the address specified as an operand of the instruction itself rather than to the address of a corresponding translation table entry.

With this example, the translation table entry load/store circuitry could be a general purpose load/store unit provided in the processing circuitry for handling the general purpose load/store instructions, but the processing circuitry may have a mechanism to distinguish (based on whether a translation table entry load/store instruction or a general purpose load/store instruction is being executed) whether the address for which the general purpose load/store unit initiates a load/store operation is the address specified as an operand of the instruction itself, or an address of a corresponding translation table entry identified by the address translation circuitry as being used for translating the address specified as the operand of the instruction. Alternatively, for some implementations the translation table entry load/store circuitry could be implemented within the address translation circuitry (rather than the load/store unit), as the address translation circuitry may already have mechanisms for controlling page table walks or obtaining translation table entries from cache structures, so it may be more efficient for the translation table entry load/store operations to be implemented by expanding the range of operations (e.g. adding compare-and-swap, or bit clear/set functionality) available to the address translation circuitry once the corresponding translation table entry's address has been identified based on the selected address.

In other examples, the translation table entry load/store triggering instruction comprises a store instruction specifying, as a store address operand, a predetermined translation table entry load/store trigger address for which a store to that address triggers the translation table entry load/store circuitry to perform the translation table entry load/store operation. Hence, with this approach there is no need to provide encoding space within the instruction set architecture for a dedicated type of instruction for triggering the translation table entry load/store operation. Instead, an existing general purpose store instruction could be used to trigger the translation table entry load/store operation, with the store address operand of that store instruction distinguishing whether the store should be treated as a conventional store operation (triggering a store to the address specified by the store address operand) or a translation table entry load/store triggering instruction (where the store address operand is an address mapped as a special address for triggering the translation table entry load/store operation). With this approach, for example, the predetermined translation table entry load/store trigger address may be an address of a memory-mapped register which when written to causes the translation table entry load/store circuitry to perform the translation table entry load/store operation.

With this approach, the translation table entry load/store circuitry may obtain the software-defined address information from a memory-based data structure accessed based on a software-programmable base address. When a regular store instruction is reused for triggering the translation table entry load/store operation, its address operand is already in use for specifying the predetermined translation table entry load/store trigger address, so the selected address used to identify which translation table entry is to be loaded/stored is obtained from a memory-based data structure instead.

When the software-defined address information specified by the memory-based data structure specifies a plurality of selected addresses, the translation table entry load/store circuitry may perform the translation table entry load/store operation for each of the selected addresses in response to a single instance of executing the store instruction acting as the translation table entry load/store triggering instruction. Hence, one advantage of using a store to a memory-mapped location to trigger the translation table entry load/store operation is that a single instruction executed by software may trigger multiple instances of the translation table entry load/store operation for each selected address specified by the memory-based data structure.

With this approach, the translation table entry load/store circuitry may operate asynchronously, not needing each selected address to be explicitly flagged using a separate instance of the instruction. The selected addresses to be processed may have previously been stored to the memory-based data structure prior to triggering the translation table entry load/store operation. With the asynchronous approach, it is possible for the set of load/stores required for each translation table entry corresponding to a defined set of selected addresses to be performed in the background of continued execution of other instructions by the processing circuitry, which can be helpful for performance.

The translation table entry load/store circuitry may update a software-accessible location to specify a progress indicator indicating progress made in performing the translation table entry load/store operation for the plurality of selected addresses. This can be helpful because if any error occurs in processing one of the selected addresses, the processing may halt and it can be useful for software to be able to identify how many of the selected addresses have successfully been processed already so that the address causing the error can be identified.

In a case when the translation table entry load/store circuitry is triggered to perform the translation table entry load/store operation for the plurality of selected addresses in response to the store instruction processed by the processing circuitry in a more privileged execution state and the processing circuitry subsequently switches to a less privileged execution state, the translation table entry load/store circuitry is capable of continuing processing of remaining addresses of the plurality of selected addresses after the switch to the less privileged execution state. Again, this reflects the asynchronous approach where applying the translation table entry load/store operation to a set of selected addresses can continue in the background while processing continues at the processing circuitry based on execution of other instructions. It can be particularly useful to allow this processing to continue despite a reduction of privilege at the processing circuitry, because often the responsibility for updating translation table entries lies with software executing in a more privileged execution state, but while those translation table entries are being updated there may be no other processing needed for the more privileged software and so it can be useful to allow a less privileged process to make some forward progress executing instructions on the processing circuitry in the meantime.

As mentioned above, a memory-based data structure can be used to define one or more selected addresses for which the translation table entry load/store operation is to be applied. The selected addresses defined in such a data structure can be discontiguous addresses which do not need to be adjacent within a given range.

Another option, which could be used either in the approach of providing a dedicated instruction in the instruction set architecture, or in the asynchronous accelerator approach of applying the operation to each address specified in a defined memory structure, could be to specify, as the software-defined address information, range information identifying a continuous range of addresses for which the translation table entry load/store operation is to be applied. Hence, for at least one variant of the translation table entry load/store operation, the software-defined address information specifies a range of addresses, and the translation table entry load/store circuitry is configured to perform the translation table entry load/store operation for each address in the range as the selected address.

The address translation circuitry may support two-stage address translation between a virtual address space and a physical address space based on a first translation table structure providing address mapping information for translating between the virtual address space and an intermediate address space and a second translation table structure providing address mapping information for translating between the intermediate address space and the physical address space. The techniques discussed above could be applied for load/stores to either entries of the first translation table structure or entries of the second translation table structure. Hence, some variants of the transition table entry load/store operation may be defined targeting specific stages of address translation.

For example, the translation table entry load/store circuitry is configured to support at least one of:
- a first-stage variant of the translation table entry load/store operation for which the selected address comprises a virtual address specified in the virtual address space, and the at least one target translation table entry comprises at least one translation table entry of the first translation table structure; and
- a second-stage variant of the translation table entry load/store operation for which the selected address comprises an intermediate address specified in the intermediate address space, and the at least one target translation table entry comprises at least one translation table entry of the second translation table structure.

Hence, the first-stage variant could be useful for operating system software to manage updates to stage 1 translation tables, while the second-stage variant could be useful for hypervisor software to manage stage 2 translation tables.

A number of variants of the translation table entry load/store operation are discussed above. It will be appreciated that a given implementation may support any one or more of these variants, provided there is at least one variant that supports clearing of access tracking metadata as discussed above.

The techniques discussed above may be implemented within a data processing apparatus which has hardware circuitry provided for implementing the processing circuitry, address translation circuitry, and translation table entry load/store circuitry as discussed above.

However, the same technique can also be implemented within a computer program which executes on a host data processing apparatus to provide an instruction execution environment for execution of target code. Such a computer program may control the host data processing apparatus to simulate the architectural environment which would be provided on a hardware apparatus which actually supports target code according to a certain instruction set architecture, even if the host data processing apparatus itself does not support that architecture. The computer program may have address translation program logic and translation table entry load/store program logic which emulates functions of the address translation circuitry and translation table entry load/store circuitry discussed above, including support for the translation table entry load/store operation. Such a simulation program can be useful, for example, when legacy code written for one instruction set architecture is being executed on a host processor which supports a different instruction set architecture. Also, the simulation can allow software development for a newer version of the instruction set architecture to start before processing hardware supporting that new architecture version is ready, as the execution of the software on the simulated execution environment can enable testing of the software in parallel with ongoing development of the hardware devices supporting the new architecture. The simulation program may be stored on a storage medium, which may be a non-transitory storage medium.

### Specific example of data processing apparatus

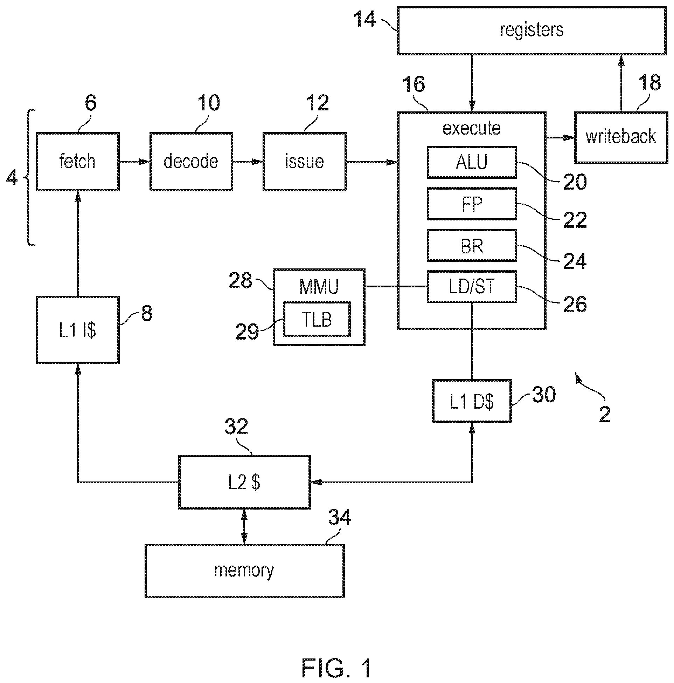

Figure 1 schematically illustrates an example of a data processing apparatus 2. The data processing apparatus has a processing pipeline 4 (an example of processing circuitry) which includes a number of pipeline stages. In this example, the pipeline stages include a fetch stage 6 for fetching instructions from an instruction cache 8; a decode stage 10 for decoding the fetched program instructions to generate micro-operations (decoded instructions) to be processed by remaining stages of the pipeline; an issue stage 12 for checking whether operands required for the micro-operations are available in a register file 14 and issuing micro-operations for execution once the required operands for a given micro-operation are available; an execute stage 16 for executing data processing operations corresponding to the micro-operations, by processing operands read from the register file 14 to generate result values; and a writeback stage 18 for writing the results of the processing back to the register file 14. It will be appreciated that this is merely one example of possible pipeline architecture, and other systems may have additional stages or a different configuration of stages. For example in an out-of-order processor a register renaming stage could be included for mapping architectural registers specified by program instructions or micro-operations to physical register specifiers identifying physical registers in the register file 14. In some examples, there may be a one-to-one relationship between program instructions decoded by the decode stage 10 and the corresponding micro-operations processed by the execute stage. It is also possible for there to be a one-to-many or many-to-one relationship between program instructions and micro-operations, so that, for example, a single program instruction may be split into two or more micro-operations, or two or more program instructions may be fused to be processed as a single micro-operation.

The execute stage 16 includes a number of processing units, for executing different classes of processing operation. For example the execution units may include a scalar arithmetic/logic unit (ALU) 20 for performing arithmetic or logical operations on scalar operands read from the registers 14; a floating point unit 22 for performing operations on floating-point values; a branch unit 24 for evaluating the outcome of branch operations and adjusting the program counter which represents the current point of execution accordingly; and a load/store unit 26 for performing load/store operations to access data in a memory system 8, 30, 32, 34. A memory management unit (MMU), which is an example of address translation circuitry, 28 is provided for performing address translations between virtual addresses specified by the load/store unit 26 based on operands of data access instructions and physical addresses identifying storage locations of data in the memory system. The MMU has a translation lookaside buffer (TLB) 29 for caching address translation data from page tables stored in the memory system, where the page table entries of the page tables define the address translation mappings and access permissions which govern, for example, whether a given process executing on the pipeline is allowed to read, write or execute instructions from a given memory region.

In this example, the memory system includes a level one data cache 30, the level one instruction cache 8, a shared level two cache 32 and main system memory 34. It will be appreciated that this is just one example of a possible memory hierarchy and other arrangements of caches can be provided. The specific types of processing unit 20 to 26 shown in the execute stage 16 are just one example, and other implementations may have a different set of processing units or could include multiple instances of the same type of processing unit so that multiple micro-operations of the same type can be handled in parallel. It will be appreciated that Figure 1 is merely a simplified representation of some components of a possible processor pipeline implementation, and the processor may include many other elements not illustrated for conciseness. While Figure 1 shows a single processor core with access to memory 34, the apparatus 2 also could have one or more further processor cores sharing access to the memory 34 with each core having respective caches 8, 30, 32.

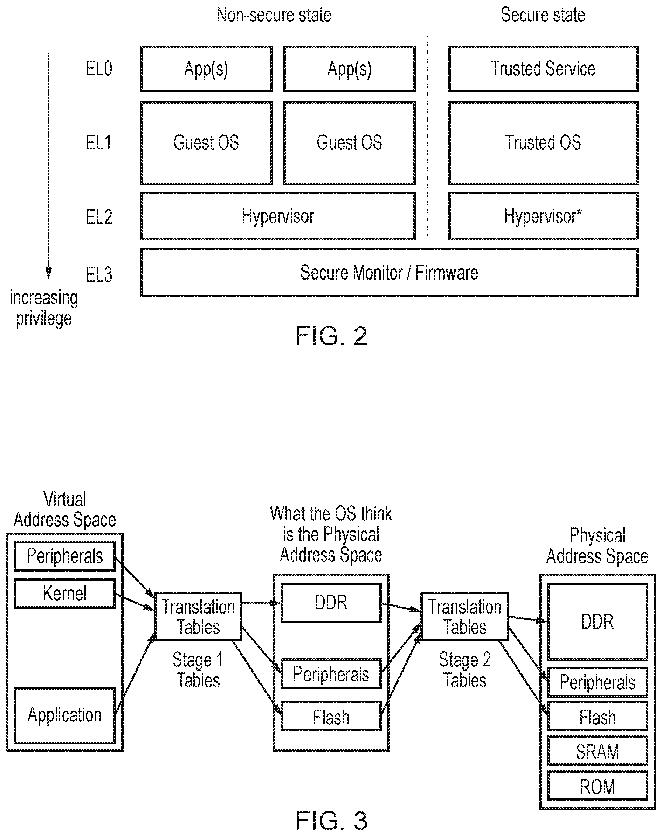

Figure 2 is a diagram illustrating different execution states (also referred to as exception levels) in which the processing circuitry 4 can operate when executing instructions. In this example there are four exception levels EL0, EL1, EL2, EL3, where exception level EL0 is the least privileged exception level and exception level EL3 is the most privileged exception level. In general, when executing in a more privileged exception level, the processing circuitry may have access to some memory locations or registers 14 which are inaccessible to lower, less privileged, exception levels.

In this example, exception level EL0 is for executing applications which are managed by corresponding operating systems or virtual machines executing at exception level EL1. Where multiple virtual machines coexist on the same physical platform then a hypervisor may be provided operating at EL2, to manage the respective virtual machines. Although Figure 2 shows examples where the hypervisor manages the virtual machines and the virtual machines manage applications, it is also possible for a hypervisor to directly manage applications at EL0.

Although not essential, some implementations may implement separate hardware-partitioned secure and non-secure domains of operation for the processing circuitry. The data processing system 2 may have hardware features implemented within the processor and the memory system to ensure that data and code associated with software processes operating in the secure domain are isolated from access by processes operating in the non-secure domain. For example, a hardware architecture such as the TrustZone^{®} architecture provided by Arm^{®} Limited of Cambridge, UK may be used. Alternatively other hardware enforced security partitioning architectures could be used. Secure applications (trusted services) may operate in exception level EL0 in the secure domain and secure (trusted) operating systems or virtual machines may operate in exception level EL1 in the secure domain. In some implementations, there is no support for EL2 in the secure state and the hypervisor may execute solely in non-secure EL2. In other implementations, there may be support for a secure hypervisor executing in secure EL2 as indicated by the asterisk in Figure 2. In some examples, a secure monitor program for managing transitions between the non-secure domain and the secure domain may be provided executing in exception level EL3. Other implementations could police transitions between the security domains in hardware so that the secure monitor program may not be needed.

### Address translation

One task performed by the MMU 28 is address translation between virtual addresses (VAs) and physical addresses (PAs). Software executing on the processing circuitry 4 specifies memory locations using virtual addresses, but these virtual addresses can be translated by the MMU 28 into physical addresses identifying the memory system location to access. A benefit of using virtual addresses is that it allows management software, such as an Operating System (OS), to control the view of memory that is presented to software. The OS can control what memory is visible, the virtual address at which that memory is visible, and what accesses are permitted to that memory. This allows the OS to sandbox applications (hiding the resources of one application from another application) and to provide abstraction from the underlying hardware. Another benefit of using virtual addresses is that an OS can present multiple fragmented physical regions of memory as a single, contiguous virtual address space to an application. Virtual addresses also benefit software developers, who will not know a system's exact memory addresses when writing their application. With virtual addresses, software developers do not need to concern themselves with the physical memory. The application knows that it is up to the OS and the hardware to work together to perform the address translation.

In practice, each application can use its own set of virtual addresses that will be mapped to different locations in the physical system. As the operating system switches between different applications it re-programs the map. This means that the virtual addresses for the current application will map to the correct physical location in memory.

Virtual addresses are translated to physical addresses through mappings. The mappings between virtual addresses and physical addresses are stored in translation tables (sometimes referred to as page tables). Translation tables are stored in memory and are managed by software, typically an OS or hypervisor. The translations tables are not static, and the tables can be updated as the needs of software change. This changes the mapping between virtual and physical addresses.

For memory accesses performed when the processing circuitry 4 is in a certain subset of execution states (in particular, when the processing circuitry 4 is in non-secure EL0 or non-secure EL1), two-stage address translation is used as shown in Figure 3 (for other execution states one stage of address translation using the stage-1 page tables is sufficient). Hence, the virtual addresses from Non-secure EL0 and Non-secure EL1 are translated using two sets of tables. These tables support virtualization and allow the hypervisor to virtualize the view of physical memory that is seen by a given virtual machine (VM) (the virtual machine corresponding to a guest operating system and the applications controlled by that guest operating system). We call the set of translations that are controlled by the OS, Stage 1. The Stage 1 tables translate virtual addresses to intermediate physical addresses (IPAs - an example of the intermediate addresses mentioned earlier). In Stage 1, the OS thinks that the IPAs are physical address spaces. However, the hypervisor controls a second set of translations, which is called Stage 2. This second set of translations translates IPAs to physical addresses.

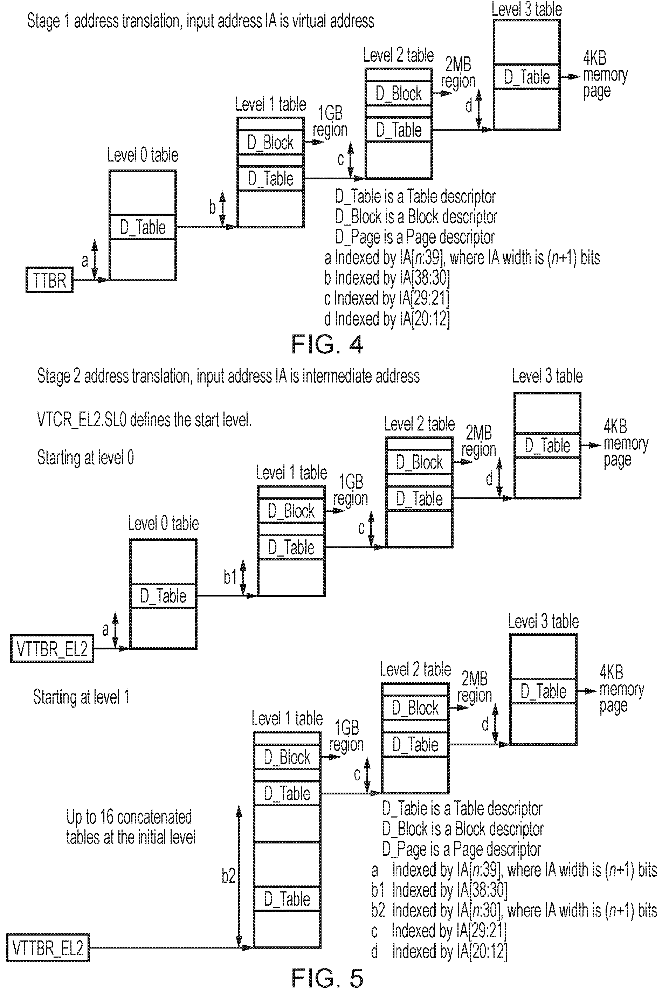

The stage-1 and stage-2 translation tables are implemented as hierarchical table structures comprising a number of levels of translation tables as shown in Figures 4 and 5 for stage-1 and stage-2 respectively. In this example, both the stage-1 and stage-2 tables can have up to 4 levels of page tables, namely level 0 (L0), level 1 (L1), level 2 (L2) and level 3 (L3).

To locate the physical address mapping for a given address, a translation table walk is performed comprising one or more translation table lookups. The translation table walk is the set of lookups that are required to translate the virtual address to the physical address. For the Non-secure EL1&0 translation regime, this set includes lookups for both the stage-1 translation and the stage-2 translation. Information returned by a successful translation table walk using stage-1 and stage-2 lookups includes:
- The required physical address (translated based on the stage-1 mapping to the intermediate address and the stage-2 mapping to the physical address).
- Access permissions and/or memory attributes for the target memory region, which provide information about how to control access to that memory region. These may include stage-1 access permissions and/or attributes defined in the stage-1 table structure and stage-2 access permissions and/or attributes defined in the stage-2 table structure.

For traversing a given one of the stage-1 and stage-2 structures, the walk starts with a read of a top-level (L0) translation table for the initial lookup, based on an address specified in a translation table base address register (TTBR for stage 1, VTTBR_EL2 for stage 2). Each translation table lookup returns a descriptor, that indicates one of the following:
- The entry is the final entry of the traversal of the stage-1 or stage-2 structure, which provides the address mapping being sought. If the entry is in the final L3, this entry is called a Page descriptor (D_Page), while if the entry providing the final entry of the walk is at one of the higher levels it is called a Block descriptor (D_Block). A Page descriptor and Block descriptor may collectively be referred to as "leaf" translation table entries, where a "leaf" refers to the final entry of the walk which provides the address mapping. The final entry of the traversal contains the output address (OA - i.e. IPA for stage 1 or PA for stage 2), and the permissions and attributes for the access. If a Block descriptor is found at a higher level of the translation table structure, this means that the Block descriptor represents a memory region of greater size than a 4kB memory page represented by a single entry at L3 (the particular sizes represented by Block descriptors at L1 and L2 being dependent on the number of index bits used to index into the L1 or L2 tables - in this example L1 and L2 Block descriptors represent 1GB and 2MB regions respectively).

- An additional level of lookup is required. In this case, the entry is called a Table descriptor (D_Table), or "branch" translation table entry, since it provides the translation table base address for that lookup in a further level of table. The Table descriptor can optionally also provide other hierarchical attributes that can be applied to the final translation. An encoding of translation table entries at levels 1 and 2 distinguishes a Block descriptor from a Table descriptor.
- The descriptor is invalid. In this case, the memory access generates a Translation fault.

Figure 4 illustrates indexing of the stage-1 translation tables using respective bits of a virtual address provided as the input address for the table lookups. The base address of the top-level table L0 is read from TTBR, and the base addresses of the L1, L2, L3 tables are indicated by addresses stored in the indexed Table descriptors in the L0, L1, L2 tables respectively (if no Block descriptors are identified in L1 or L2 tables - if a Block descriptor is found in the indexed entry of L1 or L2 then the traversal is halted at that level as the output address mapping has already been found). The particular entry to select within a given level of stage-1 translation table is determined based on an index value a, b, c, d which corresponds to a certain subset of bits of the virtual address provided as input address for the lookup. Figure 4 illustrates which bits of the input address are used for each index value a, b, c, d in one particular example. The address of the relevant entry in a given table is obtained by adding a multiple of the index bits a, b, c or d to the base address of that given table as determined based on TTBR or the address specified in a Table descriptor at the previous level (the multiplier applied to the index value corresponding to the size of one translation table entry).

Similarly, Figure 5 illustrates indexing of the stage-2 translation tables using respective bits of an intermediate address provided as the input address for a stage-2 table lookup. The indexing is similar to that shown in Figure 4 for stage 1, but uses a different base address register VTTBR_EL2 to provide the base address of the L0 table. As shown in the example of Figure 5, for stage-2 lookups it is possible to vary the starting level at which the walk of the stage-2 translation table starts, based on a value stored in a control register VTCR_EL2.SL0 which can specify that the lookup should start at either L0 or L1. If the stage-2 lookup starts at L0 then the indexing for levels 0, 1, 2, 3 uses index values a, b1, c, d respectively similar to Figure 4 for stage-1. If the stage-2 lookup starts at L1 then the indexing is performed in a similar way, but now a greater number of index bits b2 are used at the top level (L1) of the lookup as shown in Figure 5. Providing variable starting levels is not an essential feature and could be omitted if desired. Although not shown in Figure 4, it would also be possible to provide a variable starting levels for a lookup at stage-1.

In practice, when the full translation table walk including both stage-1 and stage-2 translation is performed, then each stage-1 table base address obtained from the TTBR and the Table descriptors accessed in the stage-1 L0, L1, L2 translation tables will be an intermediate address which itself needs translating using the stage-2 translation tables. Hence, in cases when the translation table walk does not encounter any Block descriptors, but proceeds all the way to L3 where a Page descriptor is found, then the full page table walk process may include accessing the multiple levels of page tables in the following sequence:
- Stage-2 translation of the base address of the stage-1 L0 page table into a physical address (the stage-1 L0 base address is typically an intermediate physical address because the stage 1 translations are configured by the operating system). The stage-2 translation comprises 4 lookups (stage-2 L0; stage-2 L1; stage-2 L2; stage-2 L3).
- Stage-1 L0 lookup of an entry at the address obtained based on the L0 index portion "a" of the target virtual address and the translated stage-1 L0 base address, to obtain the stage-1 L1 base address (an intermediate physical address)
- Stage-2 translation of the stage-1 L1 base address into a physical address (again, comprising 4 lookups).
- Stage-1 L1 lookup of an entry at the address obtained based on the L1 index portion "b" of the target virtual address and the translated stage-1 L1 base address, to obtain the stage-1 L2 base address (an intermediate physical address)
- Stage-2 translation of the stage-1 L2 base address into a physical address (again comprising 4 lookups)
- Stage-1 L2 lookup of an entry at the address obtained based on the L2 index portion "c" of the target virtual address and the translated stage-1 L2 base address, to obtain the stage-1 L3 base address (an intermediate physical address)
- Stage-2 translation of the stage-1 L3 base address into a physical address (again comprising 4 lookups).
- Stage-1 L3 lookup of an entry at the address obtained based on the L3 index portion "d" of the target virtual address and the translated stage-1 L3 base address, to identify the target intermediate physical address corresponding to the target virtual address.
- Stage-2 translation of the target intermediate physical address into the target physical address which represents the location in memory to access corresponding to the original target virtual address (again, comprising 4 lookups).

Hence, without any caching, and assuming the starting level for stage 2 is LO, the translation would comprise 24 lookups in total. If the starting level for stage 2 is L1, this can reduce the number of lookups to 19 (one less lookup for each of the 5 stage-2 translations performed). Nevertheless, as can be seen from the above sequence, performing the entire page table walk process can be very slow as it may require a large number of accesses to memory to step through each of the levels of page tables for each of the stages of address translation. This is why it is often desirable to cache information derived from translation table walks in the TLB 29 of the MMU 28. The cached information can include not only a final stage-1 address mapping from VA to IPA, a final stage-2 mapping from IPA to PA, or a combined stage-1 and stage-2 mapping from VA direct to PA (derived from previous lookups of the stage-1 and stage-2 structures), but also entries from higher level page tables of the stage-1 and the stage 2 tables can be cached within the TLB 29 of the MMU 28. This can allow at least some steps of the full page table walk to be bypassed even if the final level address mapping for a given target address is not currently in the address translation cache.

Hence, a TLB 29 that supports "walk caching" (caching of pointers from branch translation table entries) may provide a faster route to identifying the address of the location in memory storing a branch translation table entry or leaf translation table entry corresponding to a particular address. Even if walk caching is not supported, the MMU 28 may support, in hardware, translation table walking circuitry which can generate the sequence of memory accesses needed to traverse the page table structures, based on an input address to be translated, faster than would be possible if software had to explicitly execute a series of load/store/arithmetic instructions to calculate the index values into the translation tables based on the address to be translated, use that index to generate the address to read for the next level translation table entry, load the next level translation table entry, and then repeat for any further levels based on a pointer loaded for a previous level, until the leaf entry providing the address mapping is found.

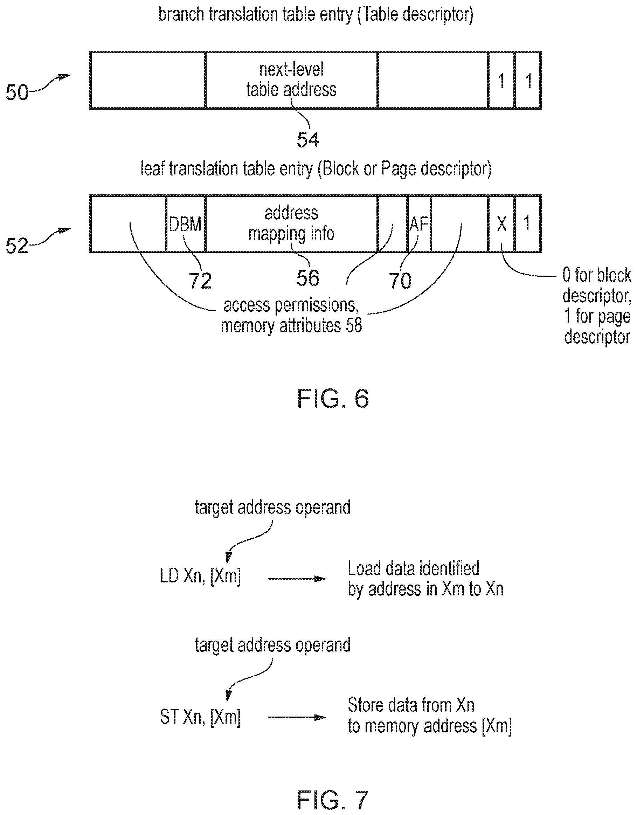

Figure 6 illustrates an example of a branch translation table entry 50 and a leaf translation table entry 52. Both types of translation table entry have an encoding which identifies that this is a valid translation table entry. In the example of Figure 6, for example, valid translation table entries are required to have the least significant bit set to 1. This encoding can help to avoid instruction address pointers, which may typically be aligned to a multiple of the instruction size and so be expected to have some lower bits equal to 0, being accidentally treated as a valid translation table entry. It will be appreciated that there could also be other ways of identifying a valid translation table entry. In a translation table walk, if the loaded value for a given level of the walk is not a validly encoded translation table entry, then a fault may be signalled.

In this example, the second least significant bit is used to distinguish branch translation table entries 50 and leaf translation table entries 52 detected at a given level of the translation table walk other than the maximum level supported in the translation table walk (in the examples above, the maximum level is level 3). Hence, for the example above, the second least significant bit is used at levels 0, 1 and 2 to distinguish between Table descriptors and Block descriptors. If the second least significant bit is 1 then the entry is a Table descriptor and if the second least significant bit is zero then the entry is a Block descriptor. Page descriptors (leaf entries at the maximum supported level 3) are encoded with the second least significant bit as 1. Again, it will be appreciated that this is just one example encoding, and other encodings could be used to distinguish the different types of descriptors.

A branch translation table entry (table descriptor) 50 specifies a next-level table address 54, which provides a pointer to the table at the next level of the translation table structure. The next-level table address 54 acts as a base address relative to which addresses of individual entries of the next-level table can be computed, based on the offsets derived from an index value selected based on bits of the address being translated.

In contrast, a leaf translation table entry 52 specifies address mapping information 56 which provides the address mapping for mapping the address to be translated from an input address space to an output address space. For the stage-1 tables, the input address space is the virtual address space and the output address space is the intermediate address space, while for the stage 2 tables the input address spaces the intermediate address space and the output address space is the physical address space.

The leaf translation table entry 52 may also specify a number of fields 58 for encoding access permissions and/or memory attributes. The access permissions may specify what types of memory accesses are allowed to be performed for the corresponding region of the address space. For example, the access permissions may specify whether the region is allowed to be read, written and/or used for an instruction fetch of an executable instruction. The memory attributes may specify other properties of the memory region, which may govern how memory accesses are performed in the case when the access is allowed based on the permissions. For example, these attributes could specify properties such as whether it is allowed to cache data from the corresponding memory region, whether the region is defined as Device memory such that reordering or merging of different memory accesses to the device memory is not allowed, etc. The access permissions and memory attributes could be encoded explicitly within fields 58 of the translation table entry, but could also be defined using an indirect reference to a register. For example, a field 58 of the leaf translation table entry 52 could specify a register number identifying a given register and/or a register field identifier identifying a particular field within a register, and the access permissions and/or memory attributes may be encoded by a value stored the register or register field that is referenced by the translation table entry. Indirect permission/attribute specification using a register can be useful to allow software to quickly update permissions for many translation table entries that all reference the same permissions/attributes field, by a single update to a register, rather than needing to update many different translation table entries in memory. Also, in implementations where each field of the permission indirection register has more bits than the corresponding permissions field of the translation table entry, the indirection can help to support more types of permissions/attributes than would be possible with the limited encoding space for permissions within the entry. It will be appreciated that some implementations may define access permissions and memory attributes through a combination of explicitly encoded information within the translation table entry format itself and indirectly referenced information within a register. While the branch translation table entry in Figure 6 is not shown as specifying any access permissions or memory attributes, in other examples a branch translation table entry could also specify some permissions or attributes that apply to the corresponding block of memory covered by the branch translation table entry.

The leaf translation table entry (and in some examples also the branch translation table entry) may also specify one or more pieces of access tracking metadata which can be used to provide information on which regions have been accessed by a load/store operation. In this example, there are two pieces of access tracking metadata: an access flag (AF) 70 and a dirty bit modifier (DBM) 72. It will be appreciated that it is not essential to provide both types of access tracking metadata, and that other types of access tracking metadata (e.g. a counter which counts access frequency to the corresponding memory region) could be used. Both forms of access tracking metadata may have a first state indicating that at least one load/store access has occurred to a corresponding region of input address space and a second state indicating that no load/store accesses have occurred to the corresponding region of input address space. The access flag 70 is used to track read access to the region and the DBM 72 can be used to track write access.

Periodically, the operating system software could set the access flag 70 to the second state (indicating zero accesses) in entries corresponding to a set of memory regions to be monitored. When a read access is made to one of these memory regions, the access flag 70 may be set to the first state (if not set already following an earlier access) in the corresponding stage-1 Block or Page descriptor. In some examples, the store memory access used to set the access flag 70 in the leaf translation table entry 52 corresponding to a target address specified by another load access may be triggered automatically in hardware by the MMU 28 when processing to the load to the target address, rather than needing an explicit software instruction to write to the leaf translation entry 52.

After a period of monitoring, the operating system can check the access flag 70 of its monitored entries to assist with operations which may benefit from information about how frequently certain pages are accessed. For example, the operating system could maintain a further tracking data structure in memory with entries per memory region which track how many times the memory region has been accessed, and so at the end of each period of monitoring the entries of that further tracking structure which correspond to memory regions with the access flag 70 set could be incremented. After a number of periods of monitoring, that further tracking structure will provide an indication of relative frequency of accesses to the corresponding memory region. This can provide useful information for controlling operations such as paging, where it can be useful to know the least frequently accessed pages of memory for which the corresponding data may be prioritised for paging out to external storage compared to other more frequently accessed pages. The particular use made of the access flag 70 may vary based on software, but in general providing at least one bit used for tracking whether any read access has occurred to the corresponding region of memory can be useful for software.

Similarly, the DBM 72 assists with tracking which pages have been subject to writes. If the operating system wishes to track whether a given page has been written, when the page is mapped or at the start of a period of monitoring, the operating system can set the access permissions for that page as "read-only" (even if the page is intended to be allowed to be written) and set the DBM bit 72 to the second state (indicating no previous write access to that page). On an access permission fault caused by a write to a read-only page when the DBM bit 72 is set, the operating system may determine from the DBM bit 72 being set that this is not a "real" violation of a read-only permission, and instead cause the operating system to update a data structure stored in memory that tracks the pages subject to write requests, and also update the DBM bit 72 to the first state (indicating at least one previous write access occurred), and update the write access permission for the page to indicate that the page can now be written to without triggering a fault. After a period of monitoring, the tracking data structure in memory can be used by software to determine whether, on paging out a particular region, it is necessary to write back the modified data from that region to external storage, or whether (if no writes have occurred), the data stored in the memory can simply be discarded on paging out the region, as the corresponding data in external memory can be assumed to still be the same if the data is clean.

In other implementations, the permissions information 58 of the translation table entry could act as access tracking metadata which is used to track whether a given page has been written. For example, all pages may initially be set as "read-only" as mentioned above, and the DBM indicator 72 may be set for pages which should really be readable/writable but which are only temporarily "read-only" due to not having been written yet. The DBM indicator 72, when set, may indicate to hardware of the MMU 28 whether it is allowed to update the permissions information 58 of the translation table entry to add write permission, when a write to a read-only region is detected. Hence, in a similar way to the above example, the first write to a previously unwritten page can be detected from the fact that the page was read only when the DBM bit 72 was set to a state indicating a hardware update to add write permission is allowed, and subsequently when the write permission is added, the permissions field can be used to determine that the page had been written to. Hence, in this example the first state of access tracking metadata (indicating at least one previous write access) can be when the permissions information 58 indicates read/write permission, and the second state (indicating no previous write access) can be when the permissions information 58 indicates read only when the DBM bit 72 is set.

Hence, for both the access flag 70 and the DBM bit 72 (and/or the permission field 58 if the permission field is used to indicate whether a page has previously been written), the responsibility for clearing the access tracking metadata back to the second state (indicating that no previous load/store accesses have occurred to the corresponding region of address space) would lie with software, not hardware. If the translation table entry load/store operations of the type discussed below were not supported, this would require a general-purpose store instruction which specifies, as its target address, the address of the memory location at which the translation table entry to be updated is stored.

### General purpose load/store instructions

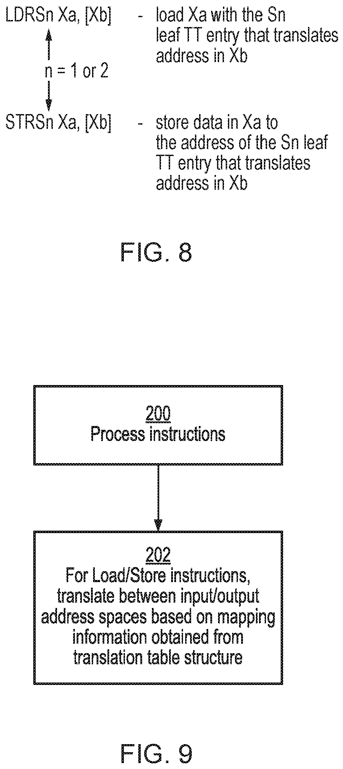

Figure 7 illustrates, for comparison with Figure 8, an example of general purpose load/store instructions.

A load instruction is an instruction which triggers a read of a location in the memory system 30, 32, 34 and returns the read data to a register. The general purpose load instruction specifies a destination register Xn to which the read data is to be loaded and a target address operand (in this example, specified using a value stored in a register Xm) which identifies the memory location to be read, e.g. using a virtual address in a virtual address space.

A store instruction is an instruction which causes store data obtained from a register to be stored to a location in the memory system. The general purpose store instruction specifies a source register Xn from which the store data is to be obtained, and a target address operand (in this example, specified using a value stored in a register Xm) which identifies the memory location to which the store data is to be written.

Hence, for general purpose load/store instructions, the load/store operation is performed on the memory location identified by the address specified by that instruction's address operand.

It is conventional to use such general purpose load/store instructions when updates to translation tables are required. A general purpose load instruction may read the current contents of a translation table entry and a general purpose store instruction may update the contents of a translation table entry. However, since the load/store operation will be performed on the location corresponding to the address specified in the load/store instruction's address operand, this means the software will first need to identify the address of the location storing the relevant translation table entry. This can be complex because, as shown above in Figures 4 and 5, this can require software to walk through the translation table structures based on a particular address of interest for which the corresponding translation table entry (that provides the address mapping for that particular address or provides a pointer on the path through the translation table walk to find the entry providing the mapping for that particular address) is to be updated. This walk will require software to execute a number of instructions (e.g. several dependent load instructions, as well as arithmetic instructions for calculating addresses of the entries to read at each level of the walk). This can be slow. As often it may be necessary to update a large number of translation table entries (e.g. when clearing access tracking metadata at the end of an accounting period for monitoring access frequency to memory, or when migrating a virtual machine from one host processor to another), this can incur a significant performance cost.

### Translation table load/store triggering instructions

In contrast, Figure 8 illustrates examples of translation table entry load/store triggering instructions, which control translation table entry load/store circuitry to perform a translation table entry load/store operation for at least one target translation table entry address selected depending on software-defined address information identifying a selected address in the input address space translated to an output address space by a given translation table structure. Unlike the general purpose load/store instruction shown in Figure 7, in the translation table entry load/store operation triggered by the translation table entry load/store triggering instruction being processed by the processing circuitry 4, the load/store operation is performed on at least one target translation table entry address which is selected based on the selected address defined in the software-defined address information, rather than performing the load/store on the selected address itself. The at least one target translation table entry address is selected by the address translation circuitry 28 to be one or more addresses of one or more target translation table entries which correspond to the selected address. Each target translation table entry is either: a leaf translation table entry that provides the actual address mapping information for translating the selected address from the input address space to the output address space, or a branch translation table entry which is traversed in the transition table walk operation for obtaining that leaf translation table entry corresponding to the selected address.

Hence, the instruction that triggers translation table entry load/store operations does not itself need to specify the address of the location storing that entry, as the address of the translation table entry to be loaded or stored can instead be derived in hardware by the address translation circuitry 28, based on the existing mechanisms for caching translation table entries within the TLB 29 (e.g. based on page table walk caches which cache pointers to entries of translation table structures), or based on page table walking circuitry implemented using hardware circuit logic which can trigger the series of memory accesses to walk through the translation table structures based on an input address. Hence, by supporting this operation, software can manipulate translation table entries without performing the page table walk in software. The page table walk is performed by the hardware and is permitted to take advantage of walk caches in the MMU 28. A benefit is to reduce software complexity and reduce the total execution time spent on the operation, therefore increasing performance. It also permits the elision of locking structures, further saving time as the software agent manipulating the translation table entries does not have to acquire a coarse-grained lock while performing the manipulation.

It also means that the software manipulating the page tables does not have to create a separate set of page table entries that points to the page table entry of interest, as the software manipulating the page tables does not need to issue explicit load/stores to the addresses of the page table entries. This is useful because by not having the page table entries explicitly mapped in the address space visible to the software manipulating the page table entries, this avoids it being possible for that software to corrupt the page table entries when another load/store operation not intended to update the page tables has its address operand incorrectly set (either by accident due to error, or maliciously based on an attacker exploiting memory bugs to cause the address operand to be wrong). If the address operand of another load/store accidentally gets set to the address of a translation table entry, the memory access will trigger a fault due to not having a valid translation table entry defined for that address in the input address space. Nevertheless, the hardware may still be able to follow a trail of pointers defined in other translation table entries to walk through the translation table structures, even though there is no page table entry providing an input-to-output address mapping for some of the addresses indicated by translation table pointers.

In some examples, the instruction set architecture supported by the processing circuitry 4 may support a new set of memory access instructions (distinct from the general purpose load/store operation) that trigger the translation table entry load/store operation. Figure 8 illustrates two examples of such instructions: a translation table entry load triggering instruction and a translation table entry store triggering instruction.

The translation table entry load triggering instruction, in this example, specifies a destination register Xa and an address operand, which in this example is provided using a value stored in a register Xb. Similarly, the translation table entry store triggering instruction, in this example, specifies a source register Xa and an address operand, which in this example is provided using a value stored in a register Xb. The address operand could specify either the address itself, or an offset relative to a reference address such as the current value of a program counter indicating the point of execution reached by the program being executed. For both the load/store variants of the instruction, the address operand is an example of software-defined address information and specifies a selected address.

For both variants, in response to the instruction being decoded by decode stage 10 and processed at execute stage 16, the MMU 28 obtains the address of the leaf translation table entry corresponding to the selected address from its address translation caches 29 (if already cached), or if there is no existing cached information to provide the address of the leaf translation table entry, the MMU 28 triggers a page table walk to obtain the address of the leaf translation table entry. For the load variant of the instruction, a load is performed to read the leaf translation table entry from the memory system 30, 32, 34 and the loaded translation table entry is written to the destination register Xa. For the store variant of the instruction, the store data obtained from source register Xa is written to the location in the memory system 30, 32, 34 corresponding to the address of the leaf translation table entry.

Figure 8 shows two examples of translation table entry load/store triggering operations that can be performed, but a number of other variants can also be provided, as follows.

Firstly, variants of the operation may differ in terms of which translation table entries are targeted by the load or store operation. In the example in Figure 8, the target translation table entry is the leaf translation table entry which translates the selected address specified using the address operand Xb. However, other examples could select one or more target translation table entries in a different manner, e.g.:
- selecting, as the target translation table entry, the translation table entry obtained for the selected address at a specified level of the translation table walk (e.g. the level 1 translation table entry obtained in a translation table walk for the selected address, regardless of whether the level 1 translation table entry is a leaf or branch translation table entry);
- selecting, as the target translation table entry, the leaf translation table entry and each branch translation table entry on the path to the leaf translation table entry used to translate the selected address. For example, this variant of a translation table entry store instruction could be used to clear access flags in each level of the translation table structure on the path to the leaf.
- Selecting, as the target translation table entry, the final valid translation table entry reached in a translation table walk for the selected address, regardless of whether that final valid entry is a branch or leaf translation table entry (this could be useful in cases where the table structure is still only partially built).

Also, there can be variants of the operation which target stage-1 or stage 2 translation table entries respectively. For a stage-1 variant of the operation, the selected address specified using the address operand Xb is a virtual address and the load/store operation is performed on at least one stage-1 translation table entry corresponding to that address. For a stage 2 variant of the operation, the selected address specified using address operand Xb is an intermediate address and the load/store operation is performed on at least one stage-2 translation table entry corresponding to that address.

Also, variants of the operation may be defined which differ in the particular operation applied to each target translation table entry:
- for the load variant of the instruction in Figure 8, the operation is a load, which loads the translation table entry to a destination register;
- for the store variant of the instruction in Figure 8, the operation is a store, which writes store data obtained from a source register Xa to the memory location associated with the target translation table entry address.

Further variants could be defined as follows:
CASS1 Xa, Xb, [Xc] - atomic compare and swap stage 1 translation table entry.
Xa provides a compare operand;
Xb provides a swap operand;
Xc provides an address operand for identifying the selected address.

In response to the instruction, the MMU 28 is controlled to obtain at least one target translation table entry address of at least one target stage-1 translation table entry corresponding to the selected address (with the target entry determined according to any of the examples above). For each such target translation table entry address, an atomic compare-and-swap operation is initiated, where the atomic compare-and-swap comprises:
- reading data from the memory location corresponding to the target translation table entry address;
- comparing the read data with the compare operand;
- if the comparison of the read data with the compare operand satisfies a comparison condition, writing the swap operand to the memory location corresponding to the target translation table entry address - this write does not take place if the comparison condition is not satisfied;
- returning a status indication (e.g. in a control register or by setting condition status flags) indicating whether or not the comparison condition was satisfied.

The read and write operations in the compare and swap are performed atomically so that the comparing swap operation is viewed as a single non-divisible operation by other observers of the memory location corresponding to the target translation table entry address. This means that the result of the compare-and-swap is equivalent to that which would be obtained if no other writes to the target translation table entry address occur between the read and the write. The atomicity could be enforced in different ways, e.g. by locking access to that address to prevent intervening write operations, or by continuing to allow access to the location corresponding to that address, but providing a mechanism for detecting when an intervening write has occurred between the read and the write of the atomic compare-and-swap operation, and cancelling and re-executing the atomic compare-and-swap operation if an intervening write is detected. In some implementations, the memory system 30, 32, 34 may have a mechanism to allow atomic compare-and-swap operations to be performed locally close to the location storing the data, to reduce the delay between the read and write being performed. Other examples may not support this and may require transfer of data between the processing pipeline 4 and memory to support the atomic compare-and-swap, so that the compare part of the operation can be done at the processing pipeline 4.

### SWAPS1 Xa, Xb, [Xc] - swap stage 1 translation table entry

Xa is a destination register, Xb provides a swap data operand, and Xc provides an address operand for identifying the selected address. The instruction causes the MMU to obtain a target translation table entry address of a stage-1 translation entry based on the selected address specified by the operand Xc. A swap operation is performed to update the translation table entry at the target translation table entry address to an updated value specified by the swap data operand in Xb, and load destination register Xa with either the pre-update value of the target translation table entry prior to that update or the post-update value of the target translation table entry after the update.

### BITSETS1 Xa, [Xb]

In response to the instruction, the MMU 28 is controlled to obtain at least one target translation table entry address of at least one target stage-1 translation table entry corresponding to the selected address (with the target entry determined according to any of the examples above). Xa provides a bit position operand or bit mask which specifies a position within the translation table entry of at least one bit to be set to 1. Xb provides an address operand for identifying the selected address.

For each such target translation table entry address, an atomic operation is initiated to:
- read data from the memory location corresponding to the target translation table entry address;
- update one or more bits of the target translation table entry at any bit positions specified by the bit position operand Xa, to set the one or more bits to 1, while leaving all other bits of the translation table entry unchanged;
- write the updated value of the translation table entry back to the memory location corresponding to the target translation table entry address.
Again, this is done atomically with atomicity enforced as discussed above for the compare-and-swap variant. A similar bit clear variant of the instruction can be provided which sets the specified bit to 0 instead of 1.

For each of the variants described for stage-1 above, similar stage-2 variants can also be provided where the address operand is instead interpreted as an intermediate address (rather than a virtual address for the stage-1 variants) and the target translation table entry is an entry of the stage-2 tables (hence, any walks to obtain the address of the target translation table entry are based on the stage-2 base address in VTTBR_EL2 instead of the stage-1 base address in TTBR as for the stage-1 variants of the operation).

In addition to all of the above, instructions can be provided to support different variants for describing the final level of walk: In a first variant, the instruction encoding indicates "perform the operation regardless of what level the final level of walk turns out to be". In a second variant, the instruction encoding indicates "It is expected that the final level of walk is level X" and the hardware raises a fault condition or signals another error response (e.g. setting an error code in a register) if this does not match the current configuration of the translation tables (i.e. if the leaf entry for the selected address is at a level other than level X).

In addition to all of the above, the instructions can handle error conditions according to a control. It is possible that software might use the instructions inappropriately, such that a leaf-level page table entry is not discovered. In these situations, the hardware can either generate an exception, or populate a register to indicate "the operation failed". Regardless of the reporting mechanism, an error code indicating the nature of the error is reported.

Different variants of the operation can be distinguished by any of: the instruction opcode, another field in the instruction encoding, a preceding instruction which modifies the behaviour of the instruction, or by control information stored in a control register or other storage location. Also, some lower bits of the selected address specified by the address operand can be used to encode the variant of the operation, since those lower bits (sub-page or sub-region address bits) are not required for identifying the address of the page corresponding to the relevant translation table entry to be updated.

At least the store, compare-and-swap and bit set/clear variants may be examples of variants which support clearing of access tracking metadata 70, 72, 58 in translation table entries, although these instructions can also be used to update other translation table information such as address mappings 56, table pointers 54 and access permissions or memory attributes 58.

Variants could also be provided which identify multiple selected addresses, each of which is to have the translation table entry load/store operation applied to that address. For example, an instruction could specify information defining a range of addresses, and each address in that range may be considered a selected address on which a respective instance of the translation table entry load/store operation is to be performed. Hence, range-based operations can target more than one translation table entry and perform the appropriate transformation to multiple leaf-level translation table entries and/or the higher-level entries that lead to them.

In the examples where a dedicated instruction is supported in the instruction set architecture for triggering the translation table entry load/store operation, the translation table entry load/store circuitry may be considered to comprise the load/store unit 26 (also used for general purpose load/store operations) and the MMU 28 (address translation circuitry).

### Methods

Figure 9 shows a method of data processing. At step 200, instructions are processed (e.g. decoded and executed) by the processing circuitry. At step 202, for any load/store instructions, the address translation circuitry 28 translates between input and output address spaces based on mapping information 56 obtained from the translation table structure.

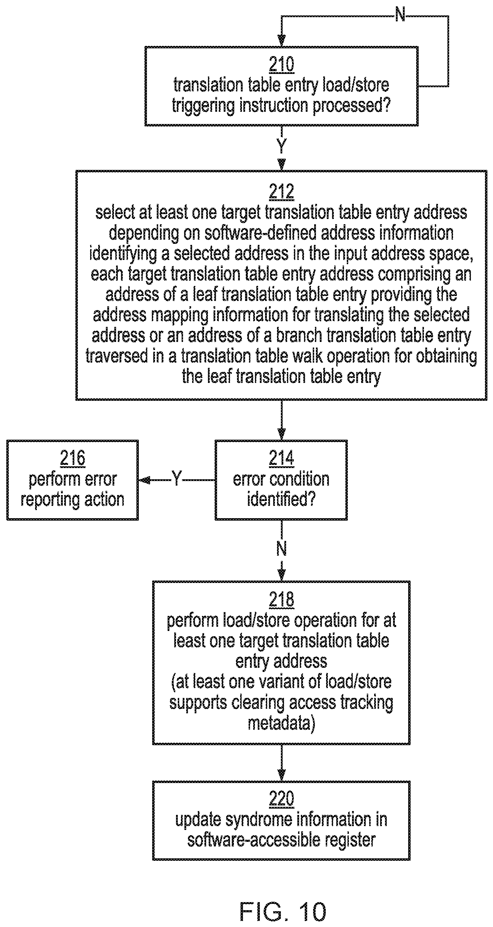

Figure 10 shows a method of processing the translation table entry load/store operation, which can be performed at step 200 of Figure 9. In response to a translation table entry load/store triggering instruction being processed at step 210, at step 212 the address translation circuitry 28 selects at least one target translation table entry address depending on software-defined address information identifying a selected address in the input address space translated by a given translation table structure. Each target translation table entry address comprises an address of a leaf translation table entry providing the address mapping information for translating the selected address or an address of a branch translation table entry traversed in a translation table walk operation for obtaining the leaf translation table entry. For example, the at least one target translation table entry address could be obtained from an address translation cache 29 or by performing a translation table walk for the selected address.

At step 214, the address translation circuitry 28 determines whether an error condition has been identified, such as there being no valid translation table entry defined for the selected address, or the leaf translation table entry being identified at a different level of the translation table structure compared to an expected level. If an error condition is identified then at step 216 an error reporting action is performed, such as signalling a fault or setting an error status indication in the register. This can inform software that the current configuration of the translation table structure was not as expected.

If no error condition was identified, then at step 218, translation table entry load/store circuitry 26, 300 performs a load/store operation for at least one target translation table entry address. This load/store could be any of the translation table entry load/store operation variants discussed above. For at least one of these variants, the load/store supports clearing of access tracking metadata.

At step 220, syndrome information is updated in a software-accessible register. The syndrome information may provide information about the translation table entry which was updated, such as specifying the level of the translation table structure at which the translation table entry was found, and/or specifying information about the access permissions or memory attributes in that entry (e.g. whether the entry specified a read-only region of memory).

### Accelerator example

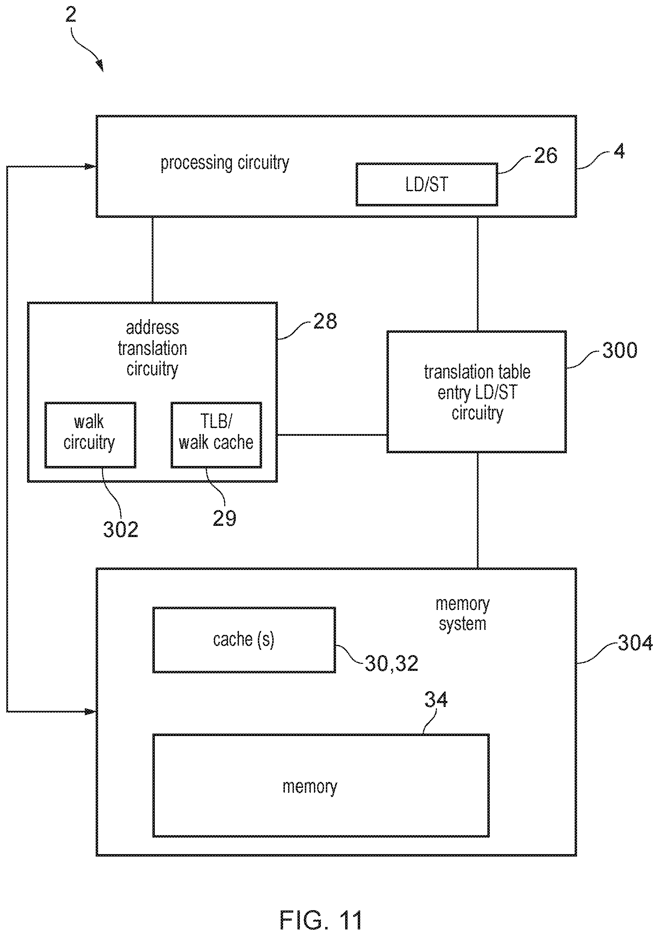

Figure 11 illustrates another example of the apparatus 2, where in this example the translation table entry load/store circuitry 300 is provided as accelerator separate from the load/store unit 26 used to perform regular load/store operations. The translation table entry load/store accelerator 300 has access to the address translation circuitry 28 so that it can trigger lookups to the TLB or any walk caches 29, and trigger walk circuitry 302 of the address translation circuitry 28 to perform hardware-managed translation table walks for a given address specified by the translation table entry load/store circuitry 300. Alternatively, the accelerator 300 could have address translation circuitry 28 provided by a local MMU-like structure, separate from the main MMU used by the load/store unit 26 for general purpose load/stores. The translation table entry load/store circuitry 300 can also initiate load/store operations to the memory system 304 (including caches 30, 32 and memory 34), which can be performed asynchronously, not requiring specific execution of individual load/store instructions for each address to be loaded/stored.

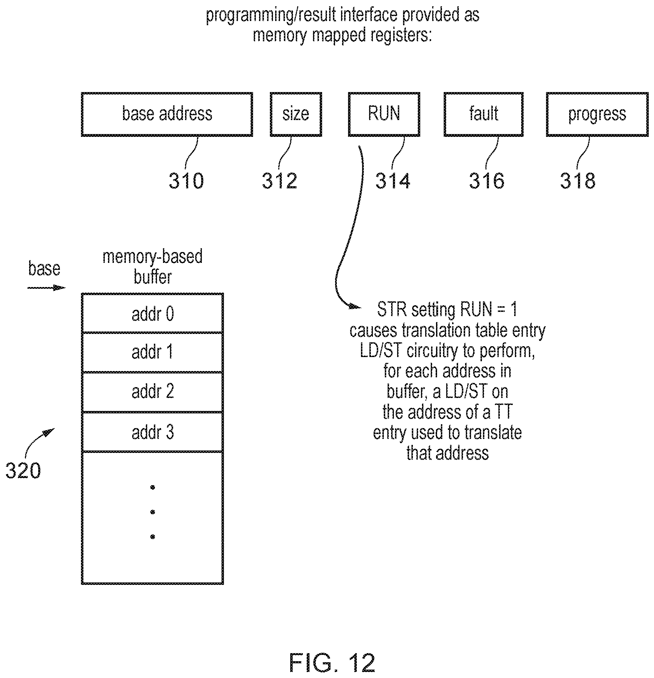

Figure 12 illustrates the programmer's interface for the accelerator 300, which comprises one or more memory-mapped registers. A memory-mapped register is a register accessed by the processing circuitry 4 by executing a general purpose load/store operation specifying, as the target address of the load/store, a predetermined address allocated for representing the memory-mapped register. The memory-mapped registers provide:
- a base address 310, for indicating a physical address indicating the start of a memory-based ring buffer structure 320 which acts as software-defined address information defining one or more addresses each to be used as the "selected address" for the translation table entry load/store operation. The ring buffer 320 is in a contiguous region of physical address space. Software can allocate to the ring buffer the addresses for which corresponding translation table entries are to be loaded/updated. The hardware of the accelerator 300 can read the buffer to identify the addresses to process using the translation table entry load/store operation.
- a size parameter 312, so that the accelerator 300 can detect the location of the end of the buffer 320.
- a "run" parameter 314 which indicates to the accelerator 300 whether it should perform the translation table entry load/store operation on the next address in the ring buffer 320. When software sets the "run" parameter to a first state (e.g. 1), the accelerator 300 starts working through the buffer to perform the translation table entry load/store operation on each address indicated in the buffer. When the accelerator reaches the end of the buffer or encounters an error, the hardware of the accelerator 300 clears the "run" parameter to a second state (e.g. 0). When the run parameter is in the second state, the accelerator 300 does not perform the translation table entry load/store operation.
- a "fault" field 316 which is used to record fault information indicating any error detected by the accelerator 300 when performing the translation table entry load/store operation. Software can clear the "fault" field to a first state (e.g. 0) before starting the operation, and the hardware 300 can set the fault field to a second state (e.g. 1) when a fault occurs (as well as changing "run" to the second state to halt the continued performance of the translation table entry load/store operation). When in the second state, the fault field could also specify further information about the cause of the fault.
- a "progress" field 318 providing a "current index" identifying the latest entry of the memory-based buffer 320 processed using the translation table entry load/store operation. The index 318 can be used to calculate, relative to the base address 310, the memory address to read for the next entry of the buffer. The index is incremented each time processing of an address from buffer 320 using the translation table entry load/store operation is successful. If an error occurs, the index provided by the progress indicator 318 can be used by software to identify which address caused the error.

The various pieces of information 310-318 shown in the memory-mapped registers can be encoded in the registers in different ways, e.g. in some examples there could be separate registers for each piece of information, or some of the information can be combined into the same register. For example, the base address 310 and size 312 could be encoded in one memory-mapped register (at a given address A) and the run 314, fault 316 and progress 318 indicators could be encoded in a second memory-mapped register (at a given address B).

Hence, with this approach the instruction which triggers the translation table entry load/store instruction may be a general purpose store instruction processed by processing circuitry 4, which specifies as its target address an address mapped to the memory-mapped register comprising the run indicator 314. This avoids the need to expend encoding space in the instruction set architecture for dedicated instructions for triggering the translation table entry load/store operation. This approach can also be helpful because the accelerator 300 enables the translation table entry load/store operation to be applied to multiple addresses in an asynchronous or semi-asynchronous manner, in the background of other instructions being processed on the processing circuitry 4 which may continue with other operations. Hence, this improves throughput of processing operations. The software can program the relevant addresses in the buffer 320, program the base/size indications 310, 312, set "current index" in the progress indicator 318 to 0, and set RUN=1 and FAULT=0. The software would then go away and work on something else, and inspect the RUN bit later to see if the process completed without any fault being identified.

When RUN=1, the hardware of the accelerator 300 could then iterate as:
1. Read entry = [base+(8*current index)] from the ringbuffer. Entry is a VA or IPA.
2. Obtain the translation table entry address corresponding to the VA or IPA read from that entry. For example, look up the VA or IPA in a walk cache 29 and/or trigger a translation table walk using the current stage-1 or stage-2 translation table base address obtained from TTBR or VTTBR_EL2 configuration, to find the leaf entry and/or branch entries for that VA or IPA, and perform a load, store, compare-and-swap, bit-set or bit-clear operation on that entry. For example, this can be used to clear the access flag 70, dirty bit 72 or other access tracking metadata.
3. Increment "current index". If this is the end of the ringbuffer (e.g. determined based on whether current index >= 2^size, where the size parameter 312 is encoded as log(2) of the number of entries in the buffer), then set RUN=0 and stop. Otherwise, repeat from step 1 for the next entry of buffer 320.

If the walk encounters a fault, or the leaf descriptor is invalid (would generate a Translation fault), the hardware of accelerator 300 sets RUN=0 and FAULT=1 and stops. This does not generate a Data Abort or other exception. Software inspects the RUN/FAULT bits and "current index" to check for progress/errors.

Once set to run, the translation table entry load/store accelerator 300 may continue running even if there is a transition to a less privileged state at the processing circuitry 4. For example, if the accelerator 300 has been configured by software executing in EL2 to apply an update to various stage-2 translation table entries, then even if the processing circuitry 4 performs an exception return to EL1 or EL0, the accelerator 300 can continue working through buffer 320 to apply the translation table entry load/store operation to each address in the buffer. Later, when the processing circuitry 4 transitions back to EL2, the software at EL2 can check the run/fault/progress indicators 314, 316, 318 to check progress and whether the operation was successful. Hence, this approach means that the translation table entry load/store operation can be performed asynchronously in the background of other instructions executing on the processing circuitry 4.

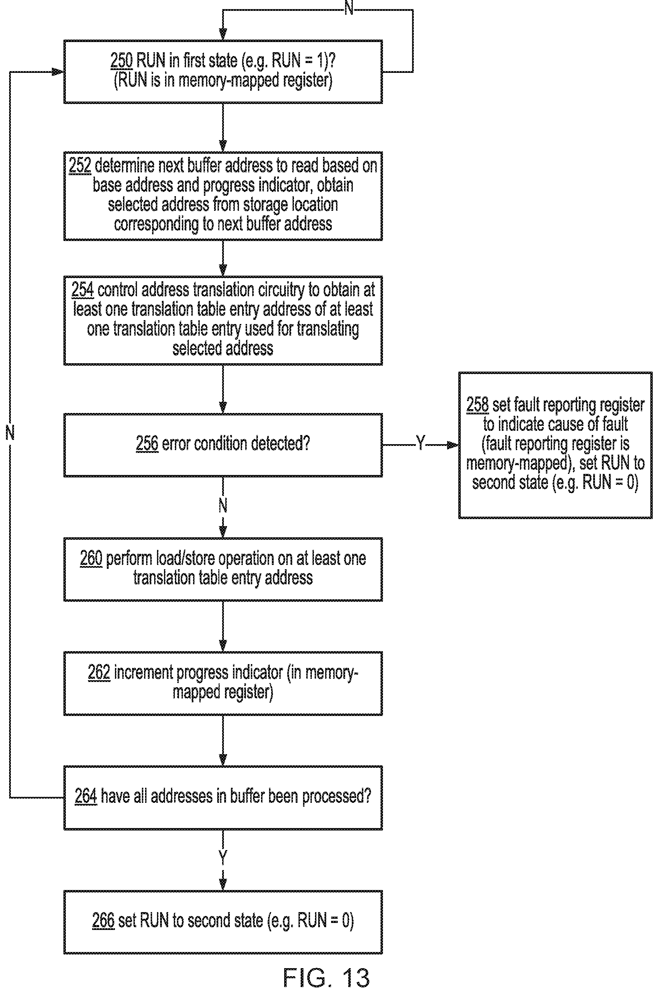

Figure 13 is a flow diagram illustrating a method of performing the translation table entry load/store operation using the accelerator 300. At step 250, the accelerator 300 determines whether the run indicator 314 (set in a memory-mapped register) is set to the first state (e.g. RUN = 1). If the run indicator is the second state (RUN = 0), then the accelerator takes no action.

When the run indicator 314 is determined to be set to the first state, then at step 252 the accelerator determines the next buffer address to be read. The next buffer address is determined based on the base address 310 and the progress indicator 318 (e.g. adding a multiple of the index provided by the progress indicator 318 to the base address 310). At step 254, the accelerator 300 controls address translation circuitry 28 to obtain at least one translation table entry address of at least one translation table entry used for translating the selected address read from the entry of the buffer 320 corresponding to the next buffer address. Hence, at step 254, a load operation is performed to load the address from the next buffer entry identified by the next buffer address, and then the selected address read from that entry is provided to the address translation circuitry 28 which can use the selected address to trigger a lookup of the walk cache 29 and/or translation table walk using the walk circuitry 302.

At step 256, the accelerator 300 and/or the address translation circuitry 28 determines whether an error condition is detected. For example, an error could be detected if the walk of the translation table structures does not find a valid translation table entry for the selected address or if a leaf translation table entry is identified at the wrong level of table structure. Errors could also occur if the load to the buffer entry based on the next buffer address violates access permissions for that address. If an error is detected, then at step 258 the fault reporting register 316 is updated to indicate that a fault occurred, and the cause of the fault. Also, the accelerator 300 clears the run indicator 314 to the second state (e.g. RUN = 0).

If no error was detected at step 256, then at step 260 the accelerator 300 performs a load/store operation on each of the one or more address is returned as the at least one translation table entry address. That load/store could be any of the variants discussed above, e.g. a load, store, compare-and-swap or bit set/clear variant. For the load variant, when this is performed by the accelerator 300, then a second buffer (identified by a second base address) could be provided to be written with the translation table entries loaded based on the addresses identified at step 254. When one of the store/compare-and-swap/bit-clear/bit-swap variants is used, additional operands for these operations (e.g. setting the store data, compare and swap values, or the bit position of the bit clear/swap operation) could be obtained from a further structure in memory or could be encoded within the same buffer as the buffer 320 used for providing the selected addresses. However, for some implementations, such additional operands may not be needed (e.g. if the accelerator 300 is dedicated to clearing of the access flag 70 and/or DBM 72, it may be implicit that the operation to perform is an atomic operation to read the translation table entry, update the access flag 70 and DBM 72 to a state indicating zero previous accesses, and write back the updated translation table entry, and so no explicit operand may be needed).

At step 262, the accelerator 300 increments the progress indicator 318 (in a memory-mapped register) to reflect that the load/store operation on the current buffer entry was successful, so that any further iteration of the translation table entry load/store will be performed on the next entry. At step 264, the accelerator 300 detects based on the progress indicator 318 and the size indicator 312 whether all valid addresses in the buffer 320 have been processed, and if not then the method returns to step 250 to continue running. The check of whether the run indicator 314 is set to the first state is repeated on each iteration of the loop, as it is possible that software could choose to explicitly halt progress by the accelerator 300 by clearing the run indicator to the second state even if not all addresses have been processed yet. If at step 264, the accelerator 300 detects that all addresses in the buffer have been processed, then at step 266 the run indicator 340 is cleared by the hardware to the second state (e.g. RUN = 0) and the accelerator then halts its operation, to await reprogramming for a later instance of performing the translation table entry load/store operation.

### Simulator

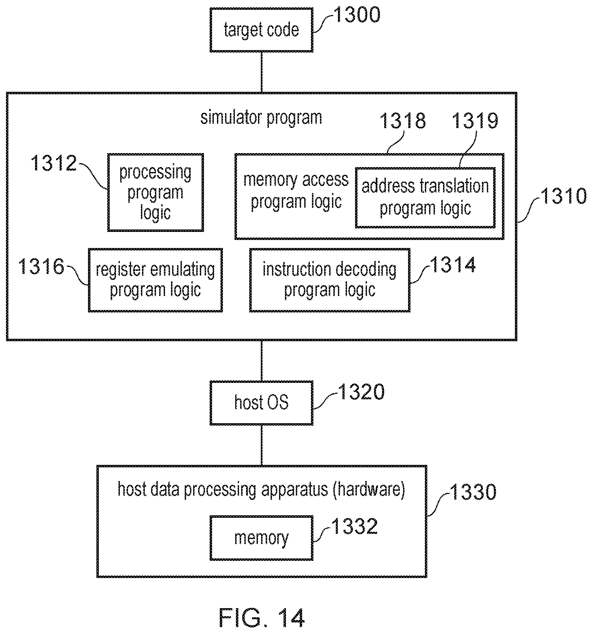

Figure 14 illustrates a simulator implementation that may be used. Whilst the earlier described embodiments implement the present invention in terms of apparatus and methods for operating specific processing hardware supporting the techniques concerned, it is also possible to provide an instruction execution environment in accordance with the embodiments described herein which is implemented through the use of a computer program. Such computer programs are often referred to as simulators, insofar as they provide a software based implementation of a hardware architecture. Varieties of simulator computer programs include emulators, virtual machines, models, and binary translators, including dynamic binary translators. Typically, a simulator implementation may run on a host processor 1330, optionally running a host operating system 1320, supporting the simulator program 1310. In some arrangements, there may be multiple layers of simulation between the hardware and the provided instruction execution environment, and/or multiple distinct instruction execution environments provided on the same host processor. Historically, powerful processors have been required to provide simulator implementations which execute at a reasonable speed, but such an approach may be justified in certain circumstances, such as when there is a desire to run code native to another processor for compatibility or re-use reasons. For example, the simulator implementation may provide an instruction execution environment with additional functionality which is not supported by the host processor hardware, or provide an instruction execution environment typically associated with a different hardware architecture. An overview of simulation is given in "Some Efficient Architecture Simulation Techniques", Robert Bedichek, Winter 1990 USENIX Conference, Pages 53 - 63.

To the extent that embodiments have previously been described with reference to particular hardware constructs or features, in a simulated embodiment, equivalent functionality may be provided by suitable software constructs or features. For example, particular circuitry may be implemented in a simulated embodiment as computer program logic. Similarly, memory hardware, such as a register or cache, may be implemented in a simulated embodiment as a software data structure. In arrangements where one or more of the hardware elements referenced in the previously described embodiments are present on the host hardware (for example, host processor 1330), some simulated embodiments may make use of the host hardware, where suitable.

The simulator program 1310 may be stored on a computer-readable storage medium (which may be a non-transitory medium), and provides a program interface (instruction execution environment) to the target code 1300 (which may include applications, operating systems and a hypervisor) which is the same as the interface of the hardware architecture being modelled by the simulator program 1310. Thus, the program instructions of the target code 1300, including the translation table entry load/store triggering instructions described above, may be executed from within the instruction execution environment using the simulator program 1310, so that a host computer 1330 which does not actually have the hardware features of the apparatus 2 discussed above can emulate these features.

Hence, the simulator program 1310 may have processing program logic 1312 which simulates the state of the processing circuitry 4 described above. For example the processing program logic 1312 may simulate transitions of execution state in response to events occurring during simulated execution of the target code 1300, and perform processing operations. Instruction decoding program logic 1314 (which can be considered a part of the processing program logic) decodes instructions of the target code 1300 and maps these to corresponding sets of instructions in the native instruction set of the host apparatus 1330. Register emulating program logic 1316 maps register accesses requested by the target code to accesses to corresponding data structures maintained on the host hardware of the host apparatus 1330, such as by accessing data in registers or memory 1332 of the host apparatus 1330. Memory access program logic 1318 has address translation program logic 1319 to implement address translation, page table walks and access control checking in a corresponding way to the MMU 28 described in the hardware-implemented embodiment above, but also has the additional function of mapping the simulated physical addresses, obtained by the address translation based on the translation tables defined for the target code 1300, to host virtual addresses used to access host memory 1332. These host virtual addresses may themselves be translated into host physical addresses using the standard address translation mechanisms supported by the host (the translation of host virtual addresses to host physical addresses being outside the scope of what is controlled by the simulator program 1310).

Hence, by supporting, within the simulator program 1310, a translation table entry load/store operation having the same functionality as discussed above, target code 1300 written for an apparatus 2 which supports this operation in hardware is presented with the same architectural interface (e.g. CPU instructions in the instruction set architecture, and/or accelerator programming interface as shown in Figure 12) that would be available in the hardware apparatus 2, so that it can also execute on a host apparatus 1330 not having this hardware.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

In the present application, lists of features preceded with the phrase "at least one of" mean that any one or more of those features can be provided either individually or in combination. For example, "at least one of: [A], [B] and [C]" encompasses any of the following options: A alone (without B or C), B alone (without A or C), C alone (without A or B), A and B in combination (without C), A and C in combination (without B), B and C in combination (without A), or A, B and C in combination.

Although illustrative embodiments of the invention have been described in detail herein with reference to the accompanying drawings, it is to be understood that the invention is not limited to those precise embodiments, and that various changes and modifications can be effected therein by one skilled in the art without departing from the scope of the invention as defined by the appended claims.

## Claims

1. An apparatus (2) comprising:
processing circuitry (4) to process instructions;
address translation circuitry (28) to translate between an input address space and an output address space based on address mapping information (56) obtained from a translation table structure comprising translation table entries; and
translation table entry load/store circuitry (300) to perform, in response to a translation table entry load/store triggering instruction processed by the processing circuitry (4), a translation table entry load/store operation for at least one target translation table entry address selected depending on software-defined address information identifying a selected address in the input address space, each target translation table entry address comprising an address of a leaf translation table entry (52) providing the address mapping information (56) for translating the selected address from the input address space to the output address space or an address of a branch translation table entry (50) traversed in a translation table walk operation for obtaining the leaf translation table entry (52) providing the address mapping information (56) for translating the selected address;
wherein for at least one variant of the translation table entry load/store operation, the translation table entry load/store operation supports, for a given target translation table entry of at least one target translation table entry corresponding to said at least one target translation table entry address, clearing access tracking metadata (70, 72, 58) of the given target translation table entry from a first state to a second state, the first state indicating that at least one load/store access has occurred to a corresponding region of input address space and the second state indicating that no load/store accesses have occurred to the corresponding region of input address space.

2. The apparatus (2) according to claim 1, in which in response to the translation table entry load/store triggering instruction, the translation table entry load/store circuitry (300) is configured to control the address translation circuitry (28) to identify the at least one target translation table entry address based on the selected address.

3. The apparatus (2) according to any of claims 1 and 2, in which, for at least one variant of the translation table entry load/store operation, the at least one translation table entry comprises the leaf translation table entry (52).

4. The apparatus (2) according to claim 3, in which for at least one variant of the translation table entry load/store operation, the translation table entry load/store operation supports updating the leaf translation table entry (52) to change at least one of:
the address mapping information (56) for translating the selected address;
access permission information indicative of which types of memory access operation are allowed;
memory attribute information for controlling handling of memory accesses to the selected address.

5. The apparatus (2) according to any preceding claim, in which, for at least one variant of the translation table entry load/store operation, the at least one translation table entry comprises a translation table entry at a specified level of the translation table structure regardless of whether that translation table entry is the leaf translation table entry (52) or the branch translation table entry (50).

6. The apparatus (2) according to any preceding claim, in which for at least one variant of the translation table entry load/store operation, the at least one translation table entry comprises the leaf translation table entry (52) and each branch translation table entry (50) traversed in the translation table walk operation for obtaining the leaf translation table entry (52).

7. The apparatus (2) according to any preceding claim, in which for at least one variant of the translation table entry load/store operation, the at least one translation table entry comprises:
in a case when the leaf translation table entry (52) has been validly defined for the selected address, the leaf translation table entry (52); and
in a case where no valid leaf translation table entry (52) has been defined for the selected address, a final valid branch translation table entry (50) reached in a traversal of the translation table structure for the selected address.

8. The apparatus (2) according to any preceding claim, in which the at least one variant of the translation table entry load/store operation supporting clearing of the access tracking metadata (70, 72, 58) comprises at least one of:
a store variant of the translation table entry load/store operation to update the given target translation table entry to an updated value specified by a store data operand;
a swap variant of the translation table entry load/store operation to update the given target translation table entry to an updated value specified by a swap data operand and load a software-accessible location with either a pre-update value of the given target translation table entry or a post-update value of the given target translation table entry;
an atomic compare-and-swap variant of the translation table entry load/store operation to determine whether a result of a comparison between the given target translation table entry and a comparison operand satisfies a comparison condition, and in response to determining that the result of the comparison satisfies the comparison condition, update the given target translation table entry based on a swap operand of the atomic compare-and-swap variant;
an atomic bit update variant of the translation table entry load/store operation to set or clear at least one specified bit of the given translation table entry, the at least one
specified bit identified by a bit selection operand; and
a load variant of the translation table entry load/store operation to load the at least one target translation table entry to at least one software-accessible register.

9. The apparatus (2) according to any preceding claim, in which in response to the translation table entry load/store triggering instruction, the translation table entry load/store circuitry (300) is configured to perform an error reporting action in response to identifying that an error condition has occurred, the error condition comprising one of:
no valid leaf translation table entry (52) being defined for the selected address; and
a valid leaf translation table entry (52) for the selected address being defined at a level of the translation table structure other than an expected level.

10. The apparatus (2) according to any preceding claim, in which the translation table entry load/store triggering instruction specifies the selected address as an operand of the translation **+0.-** table entry load/store triggering instruction, the translation table entry load/store triggering instruction having a different instruction opcode to a load/store instruction for triggering a load/store operation to be performed for an address specified as an operand of the load/store instruction.

11. The apparatus (2) according to any of claims 1 to 9, in which the translation table entry load/store triggering instruction comprises a store instruction specifying, as a store address operand, a predetermined translation table entry load/store trigger address for which a store to that address triggers the translation table entry load/store circuitry (300) to perform the translation table entry load/store operation.

12. The apparatus (2) according to claim 11, in which the translation table entry load/store circuitry (300) is configured to obtain the software-defined address information from a memory-based data structure (320) accessed based on a software-programmable base address (310); and
when the software-defined address information specifies a plurality of selected addresses, the translation table entry load/store circuitry (300) is configured to perform the translation table entry load/store operation for each of the selected addresses in response to a single instance of executing the store instruction acting as the translation table entry load/store triggering instruction.

13. The apparatus (2) according to any preceding claim, in which for at least one variant of the translation table entry load/store operation the software-defined address information specifies a range of addresses, and the translation table entry load/store circuitry (300) is configured to perform the translation table entry load/store operation for each address in the range as the selected address.

14. A method comprising:
processing instructions using processing circuitry (4); and
translating, using address translation circuitry (28), between an input address space and an output address space based on address mapping information (56) obtained from a translation table structure comprising translation table entries; and
in response to the processing circuitry (4) processing a translation table entry load/store triggering instruction, performing a translation table entry load/store operation for at least one target translation table entry address selected depending on software-defined address information identifying a selected address in the input address space, each target translation table entry address comprising an address of a leaf translation table entry (52) providing the address mapping information (56) for translating the selected address from the input address space to the output address space or an address of a branch translation table entry (50) traversed in a translation table walk operation for obtaining the leaf translation table entry (52) providing the address mapping information (56) for translating the selected address;
wherein for at least one variant of the translation table entry load/store operation, the translation table entry load/store operation supports, for a given target translation table entry of at least one target translation table entry corresponding to said at least one target translation table entry address, clearing access tracking metadata (70, 72, 58) of the given target translation table entry from a first state to a second state, the first state indicating that at least one load/store access has occurred to a corresponding region of input address space and the second state indicating that no load/store accesses have occurred to the corresponding region of input address space.

15. A computer program comprising instructions for controlling a host data processing apparatus (1330) to provide an instruction execution environment for executing target code (1300), the computer program comprising instructions, which when executed, cause:
address translation program logic (1319) to translate between an input address space and an output address space based on address mapping information (56) obtained from a translation table structure comprising translation table entries; and
translation table entry load/store program logic (1319) to perform, in response to a translation table entry load/store triggering instruction of the target code (1300), a translation table entry load/store operation for at least one target translation table entry address selected depending on software-defined address information identifying a selected address in the input address space, each target translation table entry address comprising an address of a leaf translation table entry (52) providing the address mapping information (56) for translating the selected address from the input address space to the output address space or an address of a branch translation table entry (50) traversed in a translation table walk operation for obtaining the leaf translation table entry (52) providing the address mapping information (56) for translating the selected address;
wherein for at least one variant of the translation table entry load/store operation, the translation table entry load/store operation supports, for a given target translation table entry of
at least one target translation table entry corresponding to said at least one target translation table entry address, clearing access tracking metadata (70, 72, 58) of the given target translation table entry from a first state to a second state, the first state indicating that at least one load/store access has occurred to a corresponding region of input address space and the second state indicating that no load/store accesses have occurred to the corresponding region of input address space.

## Patentansprüche

1. Vorrichtung (2), die Folgendes umfasst:
eine Verarbeitungsschaltung (4), um Befehle zu verarbeiten;
eine Adressenumsetzungsschaltung (28), um zwischen einem Eingangsadressenraum und einem Ausgangsadressenraum auf der Basis von Adressenabbildungsinformationen (56) umzusetzen, die von einer Umsetzungstabellenstruktur mit Umsetzungstabelleneinträgen erhalten werden; und
eine Umsetzungstabelleneintrag-Lade/SpeicherSchaltung (300), um in Reaktion auf einen Umsetzungstabelleneintrag-Lade/Speicher-Auslösebefehl, der durch die Verarbeitungsschaltung (4) verarbeitet wird, eine Umsetzungstabelleneintrag-Lade/Speicher-Operation für mindestens eine Zielumsetzungstabelleneintragsadresse durchzuführen, die in Abhängigkeit von durch Software definierten Adresseninformationen ausgewählt wird, die eine ausgewählte Adresse im Eingangsadressenraum identifizieren, wobei jede Zielumsetzungstabelleneintragsadresse eine Adresse eines Blattumsetzungstabelleneintrags (52), der die Adressenabbildungsinformationen (56) zum Umsetzen der ausgewählten Adresse vom Eingangsadressenraum in den Ausgangsadressenraum bereitstellt, oder eine Adresse eines Zweigumsetzungstabelleneintrags (50), der in einer Umsetzungstabellendurchlaufoperation zum Erhalten des Blattumsetzungstabelleneintrags (52) durchlaufen wird, der die Adressenabbildungsinformationen (56) zum Umsetzen der ausgewählten Adresse bereitstellt, umfasst;
wobei für mindestens eine Variante der Umsetzungstabelleneintrag-Lade/Speicher-Operation die Umsetzungstabelleneintrag-Lade/Speicher-Operation für einen gegebenen Zielumsetzungstabelleneintrag von mindestens einem Zielumsetzungstabelleneintrag, der der mindestens einen Zielumsetzungstabelleneintragsadresse entspricht, das Löschen von Zugriffsverfolgungsmetadaten (70, 72, 58) des gegebenen Zielumsetzungstabelleneintrags von einem ersten Zustand in einen zweiten Zustand unterstützt, wobei der erste Zustand angibt, dass mindestens ein Lade/Speicher-Zugriff auf einen entsprechenden Bereich des Eingangsadressenraums stattgefunden hat, und der zweite Zustand angibt, dass keine Lade/Speicher-Zugriffe auf den entsprechenden Bereich des Eingangsadressenraums stattgefunden haben.

2. Vorrichtung (2) nach Anspruch 1, wobei in Reaktion auf den Umsetzungstabelleneintrag-Lade/Speicher-Auslösebefehl die Umsetzungstabelleneintrag-Lade/Speicher-Schaltung (300) dazu konfiguriert ist, die Adressenumsetzungsschaltung (28) zu steuern, um die mindestens eine Zielumsetzungstabelleneintragsadresse auf der Basis der ausgewählten Adresse zu identifizieren.

3. Vorrichtung (2) nach einem der Ansprüche 1 und 2, wobei für mindestens eine Variante der Umsetzungstabelleneintrag-Lade/Speicher-Operation der mindestens eine Umsetzungstabelleneintrag den Blattumsetzungstabelleneintrag (52) umfasst.

4. Vorrichtung (2) nach Anspruch 3, wobei für mindestens eine Variante der Umsetzungstabelleneintrag-Lade/Speicher-Operation die Umsetzungstabelleneintrag-Lade/Speicher-Operation die Aktualisierung des Blattumsetzungstabelleneintrags (52) unterstützt, um mindestens eines von Folgenden zu ändern:
die Adressenabbildungsinformationen (56) zum Umsetzen der ausgewählten Adresse;
Zugriffsberechtigungsinformationen, die angeben, welche Typen von Arbeitsspeicherzugriffsoperation zugelassen sind;
Arbeitsspeicherattributinformationen zum Steuern der Handhabung von Arbeitsspeicherzugriffen auf die ausgewählte Adresse.

5. Vorrichtung (2) nach einem vorangehenden Anspruch, wobei für mindestens eine Variante der Umsetzungstabelleneintrag-Lade/Speicher-Operation der mindestens eine Umsetzungstabelleneintrag einen Umsetzungstabelleneintrag auf einer vorgegebenen Ebene der Umsetzungstabellenstruktur ungeachtet dessen umfasst, ob dieser Umsetzungstabelleneintrag der Blattumsetzungstabelleneintrag (52) oder der Zweigumsetzungstabelleneintrag (50) ist.

6. Vorrichtung (2) nach einem vorangehenden Anspruch, wobei für mindestens eine Variante der Umsetzungstabelleneintrag-Lade/Speicher-Operation der mindestens eine Umsetzungstabelleneintrag den Blattumsetzungstabelleneintrag (52) und jeden Zweigumsetzungstabelleneintrag (50) umfasst, der in der Umsetzungstabellendurchlaufoperation zum Erhalten des Blattumsetzungstabelleneintrags (52) durchlaufen wird.

7. Vorrichtung (2) nach einem vorangehenden Anspruch, wobei für mindestens eine Variante der Umsetzungstabelleneintrag-Lade/Speicher-Operation der mindestens eine Umsetzungstabelleneintrag Folgendes umfasst:
in einem Fall, in dem der Blattumsetzungstabelleneintrag (52) für die ausgewählte Adresse gültig definiert wurde, den Blattumsetzungstabelleneintrag (52); und
in einem Fall, in dem kein gültiger Umsetzungstabelleneintrag (52) für die ausgewählte Adresse definiert wurde, einen endgültigen gültigen Zweigumsetzungstabelleneintrag (50), der in einem Durchlauf der Umsetzungstabellenstruktur für die ausgewählte Adresse erreicht wird.

8. Vorrichtung (2) nach einem vorangehenden Anspruch, wobei die mindestens eine Variante der Umsetzungstabelleneintrag-Lade/Speicher-Operation,
die das Löschen der Zugriffsverfolgungsmetadaten (70, 72, 58) unterstützt, mindestens eine von Folgenden umfasst:
eine Speichervariante der Umsetzungstabelleneintrag-Lade/Speicher-Operation, um den gegebenen Zielumsetzungstabelleneintrag auf einen aktualisierten Wert zu aktualisieren, der durch einen Datenspeicheroperanden vorgegeben wird;
eine Austauschvariante der Umsetzungstabelleneintrag-Lade/Speicher-Operation, um den gegebenen Zielumsetzungstabelleneintrag auf einen aktualisierten Wert zu aktualisieren, der durch einen Datenaustauschoperanden vorgegeben wird, und eine für Software zugängliche Stelle mit entweder einem Voraktualisierungswert des gegebenen Zielumsetzungstabelleneintrags oder einem Nachaktualisierungswert des gegebenen Zielumsetzungstabelleneintrags zu laden;
eine atomare Vergleichs- und Austauschvariante der Umsetzungstabelleneintrag-Lade/Speicher-Operation, um zu bestimmen, ob ein Ergebnis eines Vergleichs zwischen dem gegebenen Zielumsetzungstabelleneintrag und einem Vergleichsoperanden eine Vergleichsbedingung erfüllt, und in Reaktion auf die Bestimmung, dass das Ergebnis des Vergleichs die Vergleichsbedingung erfüllt, den gegebenen Zielumsetzungstabelleneintrag auf der Basis eines Austauschoperanden der atomaren Vergleichs- und Austauschvariante zu aktualisieren,
eine atomare Bitaktualisierungsvariante der Umsetzungstabelleneintrag-Lade/Speicher-Operation, um mindestens ein vorgegebenes Bit des gegebenen Umsetzungstabelleneintrags zu setzen oder zu löschen, wobei das mindestens eine vorgegebene Bit durch einen Bitauswahloperanden identifiziert wird; und
eine Ladevariante der Umsetzungstabelleneintrag-Lade/Speicher-Operation, um den mindestens einen Zielumsetzungstabelleneintrag in mindestens ein für Software zugängliches Register zu laden.

9. Vorrichtung (2) nach einem vorangehenden Anspruch, wobei in Reaktion auf den Umsetzungstabelleneintrag-Lade/Speicher-Auslösebefehl die Umsetzungstabelleneintrag-Lade/Speicher-Schaltung (300) dazu konfiguriert ist, eine Fehlermeldungshandlung in Reaktion auf das Identifizieren, dass eine Fehlerbedingung aufgetreten ist, durchzuführen, wobei die Fehlerbedingung eine von Folgenden umfasst:
dass kein gültiger Blattumsetzungstabelleneintrag (52) für die ausgewählte Adresse definiert ist; und
ein gültiger Blattumsetzungstabelleneintrag (52) für die ausgewählte Adresse auf einer anderen Ebene der Umsetzungstabellenstruktur als einer erwarteten Ebene definiert ist.

10. Vorrichtung (2) nach einem vorangehenden Anspruch, wobei der Umsetzungstabelleneintrag-Lade/Speicher-Auslösebefehl eine ausgewählte Adresse als Operand des Umsetzungstabelleneintrag-Lade/Speicher-Auslösebefehls vorgibt, wobei der Umsetzungstabelleneintrag-Lade/Speicher-Auslösebefehl einen unterschiedlichen Befehlsoperationscode zu einem Lade/Speicher-Befehl zum Auslösen einer Lade/Speicher-Operation aufweist, die für eine Adresse durchgeführt werden soll, die als Operand des Lade/Speicher-Befehls vorgegeben ist.

11. Vorrichtung (2) nach einem der Ansprüche 1 bis 9, wobei der Umsetzungstabelleneintrag-Lade/Speicher-Auslösebefehl einen Speicherbefehl umfasst, der als Adressenspeicheroperanden eine vorbestimmte Umsetzungstabelleneintrag-Lade/Speicher-Auslöseadresse vorgibt, für die ein Speichern in dieser Adresse auslöst, dass die Umsetzungstabelleneintrag-Lade/Speicher-Schaltung (300) die Umsetzungstabelleneintrag-Lade/Speicher-Operation durchführt.

12. Vorrichtung (2) nach Anspruch 11, wobei die Umsetzungstabelleneintrag-Lade/Speicher-Schaltung (300) dazu konfiguriert ist, die durch Software definierten Adresseninformationen von einer Datenstruktur (320) auf Arbeitsspeicherbasis zu erhalten, auf die auf der Basis einer durch Software programmierbaren Basisadresse (310) zugegriffen wird; und
wenn die durch Software definierten Adresseninformationen mehrere ausgewählte Adressen vorgeben, die Umsetzungstabelleneintrag-Lade/Speicher-Schaltung (300) dazu konfiguriert ist, die Umsetzungstabelleneintrag-Lade/Speicher-Operation für jede der ausgewählten Adressen in Reaktion auf eine einzelne Instanz der Ausführung des Speicherbefehls durchzuführen, der als Umsetzungstabelleneintrag-Lade/Speicher-Auslösebefehl wirkt.

13. Vorrichtung (2) nach einem vorangehenden Anspruch, wobei für mindestens eine Variante der Umsetzungstabelleneintrag-Lade/Speicher-Operation die durch Software definierten Adresseninformationen einen Bereich von Adressen vorgeben, und die Umsetzungstabelleneintrag-Lade/Speicher-Schaltung (300) dazu konfiguriert ist, die Umsetzungstabelleneintrag-Lade/Speicher-Operation für jede Adresse in dem Bereich als ausgewählte Adresse durchzuführen.

14. Verfahren, das Folgendes umfasst:
Verarbeiten von Befehlen unter Verwendung einer Verarbeitungsschaltung (4); und
Umsetzen zwischen einem Eingangsadressenraum und einem Ausgangsadressenraum unter Verwendung einer Adressenumsetzungsschaltung (28) auf der Basis von Adressenabbildungsinformationen (56), die von einer Umsetzungstabellenstruktur mit Umsetzungstabelleneinträgen erhalten werden; und
in Reaktion darauf, dass die Verarbeitungsschaltung (4) einen Umsetzungstabelleneintrag-Lade/Speicher-Auslösebefehl verarbeitet, Durchführen einer Umsetzungstabelleneintrag-Lade/Speicher-Operation für mindestens eine Zielumsetzungstabelleneintragsadresse, die in Abhängigkeit von durch Software definierten Adresseninformationen ausgewählt wird, die eine ausgewählte Adresse im Eingangsadressenraum identifizieren, wobei jede Zielumsetzungstabelleneintragsadresse eine Adresse eines Blattumsetzungstabelleneintrags (52), der die Adressenabbildungsinformationen (56) zum Umsetzen der ausgewählten Adresse vom Eingangsadressenraum in den Ausgangsadressenraum bereitstellt, oder eine Adresse eines Zweigumsetzungstabelleneintrags (50), der in einer Umsetzungstabellendurchlaufoperation zum Erhalten des Blattumsetzungstabelleneintrags (52) durchlaufen wird, der die Adressenabbildungsinformationen (56) zum Umsetzen der ausgewählten Adresse bereitstellt, umfasst;
wobei für mindestens eine Variante der Umsetzungstabelleneintrag-Lade/Speicher-Operation die Umsetzungstabelleneintrag-Lade/Speicher-Operation für einen gegebenen Zielumsetzungstabelleneintrag von mindestens einem Zielumsetzungstabelleneintrag, der der mindestens einen Zielumsetzungstabelleneintragsadresse entspricht, das Löschen von Zugriffsverfolgungsmetadaten (70, 72, 58) des gegebenen Zielumsetzungstabelleneintrags von einem ersten Zustand in einen zweiten Zustand unterstützt, wobei der erste Zustand angibt, dass mindestens ein Lade/Speicher-Zugriff auf einen entsprechenden Bereich des Eingangsadressenraums stattgefunden hat, und der zweite Zustand angibt, dass keine Lade/Speicher-Zugriffe auf den entsprechenden Bereich des Eingangsadressenraums stattgefunden haben.

15. Computerprogramm mit Befehlen zum Steuern einer Host-Datenverarbeitungsvorrichtung (1330), um eine Befehlsausführungsumgebung zum Ausführen eines Zielcodes (1300) bereitzustellen, wobei das Computerprogramm Befehle umfasst, die, wenn sie ausgeführt werden, bewirken, dass:
eine Adressenumsetzungsprogrammlogik (1319) zwischen einem Eingangsadressenraum und einem Ausgangsadressenraum auf der Basis von Adressenabbildungsinformationen (56) umsetzt, die von einer Umsetzungstabellenstruktur mit Umsetzungstabelleneinträgen erhalten werden; und
eine Umsetzungstabelleneintrag-Lade/Speicher-Programmlogik (1319) in Reaktion auf einen Umsetzungstabelleneintrag-Lade/Speicher-Auslösebefehl des Zielcodes (1300) eine Umsetzungstabelleneintrag-Lade/Speicher-Operation für mindestens eine Zielumsetzungstabelleneintragsadresse, die in Abhängigkeit von durch Software definierten Adresseninformationen ausgewählt wird, die eine ausgewählte Adresse im Eingangsadressenraum identifizieren, durchführt, wobei jede Zielumsetzungstabelleneintragsadresse eine Adresse eines Blattumsetzungstabelleneintrags (52), der die Adressenabbildungsinformationen (56) zum Umsetzen der ausgewählten Adresse vom Eingangsadressenraum in den Ausgangsadressenraum bereitstellt, oder eine Adresse eines Zweigumsetzungstabelleneintrags (50), der in einer Umsetzungstabellendurchlaufoperation zum Erhalten des Blattumsetzungstabelleneintrags (52) durchlaufen wird, der die Adressenabbildungsinformationen (56) zum Umsetzen der ausgewählten Adresse bereitstellt, umfasst;
wobei für mindestens eine Variante der Umsetzungstabelleneintrag-Lade/Speicher-Operation die Umsetzungstabelleneintrag-Lade/Speicher-Operation für einen gegebenen Zielumsetzungstabelleneintrag von mindestens einem Zielumsetzungstabelleneintrag, der der mindestens einen Zielumsetzungstabelleneintragsadresse entspricht, das Löschen von Zugriffsverfolgungsmetadaten (70, 72, 58) des gegebenen Zielumsetzungstabelleneintrags von einem ersten Zustand in einen zweiten Zustand unterstützt, wobei der erste Zustand angibt, dass mindestens ein Lade/Speicher-Zugriff auf einen entsprechenden Bereich des Eingangsadressenraums stattgefunden hat, und der zweite Zustand angibt, dass keine Lade/Speicher-Zugriffe auf den entsprechenden Bereich des Eingangsadressenraums stattgefunden haben.

## Revendications

1. Appareil (2) comprenant :
des circuits de traitement (4) pour exécuter des instructions ;
des circuits de traduction d'adresses (28) pour effectuer une traduction entre un espace d'adresses d'entrée et un espace d'adresses de sortie sur la base d'informations de mappage d'adresses (56) obtenues à partir d'une structure de table de traduction comprenant des entrées de table de traduction ; et
des circuits de chargement/stockage d'entrée de table de traduction (300) pour effectuer, en réponse à une instruction de déclenchement de chargement/stockage d'entrée de table de traduction traitée par les circuits de traitement (4), une opération de chargement/stockage d'entrée de table de traduction pour au moins une adresse d'entrée de table de traduction cible sélectionnée en fonction d'informations d'adresse définies par logiciel identifiant une adresse sélectionnée dans l'espace d'adresses d'entrée, chaque adresse d'entrée de table de traduction cible comprenant une adresse d'une entrée de table de traduction feuille (52) fournissant les informations de mappage d'adresses (56) pour traduire l'adresse sélectionnée de l'espace d'adresses d'entrée vers l'espace d'adresses de sortie ou une adresse d'une entrée de table de traduction de branche (50) parcourue dans une opération de parcours de table de traduction pour obtenir l'entrée de table de traduction feuille (52) fournissant les informations de mappage d'adresses (56) pour traduire l'adresse sélectionnée ;
où, pour au moins une variante de l'opération de chargement/stockage d'entrée de table de traduction, l'opération de chargement/stockage d'entrée de table de traduction supporte, pour une entrée de table de traduction cible donnée d'au moins une entrée de table de traduction cible correspondant à ladite au moins une adresse d'entrée de table de traduction cible, l'effacement des métadonnées de suivi d'accès (70, 72, 58) de l'entrée de table de traduction cible donnée d'un premier état à un deuxième état, le premier état indiquant qu'au moins un accès de chargement/stockage s'est produit à une région correspondante de l'espace d'adresses d'entrée et le deuxième état indiquant qu'aucun accès de chargement/stockage n'a eu lieu à la région correspondante de l'espace d'adresses d'entrée.

2. Appareil (2) selon la revendication 1, dans lequel, en réponse à l'instruction de déclenchement de chargement/stockage d'entrée de table de traduction, les circuits de chargement/stockage d'entrée de table de traduction (300) sont configurés pour commander les circuits de traduction d'adresses (28) pour identifier l'au moins une adresse d'entrée de table de traduction cible sur la base de l'adresse sélectionnée.

3. Appareil (2) selon l'une quelconque des revendications 1 et 2, dans lequel, pour au moins une variante de l'opération de chargement/stockage d'entrée de table de traduction, l'au moins une entrée de table de traduction comprend l'entrée de table de traduction feuille (52).

4. Appareil (2) selon la revendication 3, dans lequel, pour au moins une variante de l'opération de chargement/stockage d'entrée de table de traduction, l'opération de chargement/stockage d'entrée de table de traduction supporte la mise à jour de l'entrée de table de traduction feuille (52) pour changer au moins l'un des éléments suivants :
les informations de mappage d'adresses (56) pour traduire l'adresse sélectionnée ;
les informations d'autorisation d'accès indiquant quels types d'opération d'accès à la mémoire sont autorisés ;
les informations d'attribut de mémoire pour contrôler la gestion des accès mémoire à l'adresse sélectionnée.

5. Appareil (2) selon l'une quelconque des revendications précédentes, dans lequel, pour au moins une variante de l'opération de chargement/stockage d'entrée de table de traduction, l'au moins une entrée de table de traduction comprend une entrée de table de traduction à un niveau spécifié de la structure de table de traduction indépendamment du fait que cette entrée de table de traduction soit l'entrée de table de traduction feuille (52) ou l'entrée de table de traduction de branche (50).

6. Appareil (2) selon l'une quelconque des revendications précédentes, dans lequel, pour au moins une variante de l'opération de chargement/stockage d'entrée de table de traduction, l'au moins une entrée de table de traduction comprend l'entrée de table de traduction feuille (52) et chaque entrée de table de traduction branche (50) parcourue dans l'opération de parcours de table de traduction pour obtenir l'entrée de table de traduction feuille (52).

7. Appareil (2) selon l'une quelconque des revendications précédentes, dans lequel, pour au moins une variante de l'opération de chargement/stockage d'entrée de table de traduction, l'au moins une entrée de table de traduction comprend :
dans le cas où l'entrée de table de traduction feuille (52) a été définie de manière valable pour l'adresse sélectionnée, l'entrée de table de traduction feuille (52) ; et
dans le cas où aucune entrée de table de traduction feuille valide (52) n'a été définie pour l'adresse sélectionnée, une entrée finale de table de traduction branche valide (50) atteinte dans un parcours de la structure de table de traduction pour l'adresse sélectionnée.

8. Appareil (2) selon l'une quelconque des revendications précédentes, dans lequel l'au moins une variante de l'opération de chargement/stockage d'entrée de table de traduction supportant l'effacement des métadonnées de suivi d'accès (70, 72, 58) comprend au moins l'une des opérations suivantes :
une variante de stockage de l'opération de chargement/stockage d'entrée de table de traduction pour mettre à jour l'entrée de table de traduction cible donnée en une valeur mise à jour spécifiée par un opérande de données de stockage ;
une variante d'échange de l'opération de chargement/stockage d'entrée de table de traduction pour mettre à jour l'entrée de table de traduction cible donnée en une valeur mise à jour spécifiée par un opérande de données d'échange et charger un emplacement accessible par logiciel avec soit une valeur de pré-mise à jour de l'entrée de table de traduction cible donnée, soit une valeur de post-mise à jour de l'entrée de table de traduction cible donnée ;
une variante atomique de comparaison et d'échange de l'opération de chargement/stockage d'entrée de table de traduction pour déterminer si un résultat d'une comparaison entre l'entrée de table de traduction cible donnée et un opérande de comparaison satisfait à une condition de comparaison et, en réponse à la détermination que le résultat de la comparaison satisfait à la condition de comparaison, mettre à jour l'entrée de table de traduction cible donnée sur la base d'un opérande d'échange de la variante atomique de comparaison et d'échange ;
une variante atomique de mise à jour de bits de l'opération de chargement/stockage d'entrée de table de traduction pour définir ou effacer au moins un bit spécifié de l'entrée de table de traduction donnée, l'au moins un bit spécifié étant identifié par un opérande de sélection de bits ; et
une variante de chargement de l'opération de chargement/stockage d'entrée de table de traduction pour charger l'au moins une entrée de table de traduction cible dans au moins un registre accessible par logiciel.

9. Appareil (2) selon l'une quelconque des revendications précédentes, dans lequel, en réponse à l'instruction de déclenchement de chargement/stockage d'entrée de table de traduction, les circuits de chargement/stockage d'entrée de table de traduction (300) sont configurés pour exécuter une action de signalement d'erreur en réponse à l'identification qu'une condition d'erreur s'est produite, la condition d'erreur comprenant l'une des conditions suivantes :
aucune entrée de table de traduction feuille valide (52) n'est définie pour l'adresse sélectionnée : et
une entrée de table de traduction feuille valide (52) pour l'adresse sélectionnée est définie à un niveau de la structure de table de traduction autre qu'un niveau attendu.

10. Appareil (2) selon l'une quelconque des revendications précédentes, dans lequel l'instruction de déclenchement de chargement/stockage d'entrée de table de traduction spécifie l'adresse sélectionnée comme opérande de l'instruction de déclenchement de chargement/stockage d'entrée de table de traduction, l'instruction de déclenchement de chargement/stockage d'entrée de table de traduction ayant un opcode d'instruction différent d'une instruction de chargement/stockage pour déclencher une opération de chargement/stockage à exécuter pour une adresse spécifiée comme opérande de l'instruction de chargement/stockage.

11. Appareil (2) selon l'une quelconque des revendications 1 à 9, dans lequel l'instruction de déclenchement de chargement/stockage d'entrée de table de traduction comprend une instruction de stockage spécifiant, comme opérande d'adresse de stockage, une adresse de déclenchement de chargement/stockage d'entrée de table de traduction prédéterminée pour laquelle un stockage à cette adresse déclenche l'exécution de l'opération de chargement/stockage d'entrée de table de traduction par les circuits de chargement/stockage d'entrée de table de traduction (300).

12. Appareil (2) selon la revendication 11, dans lequel les circuits de chargement/stockage d'entrée de table de traduction (300) sont configurés pour obtenir les informations d'adresse définies par logiciel à partir d'une structure de données à base de mémoire (320) à laquelle on accède sur la base d'une adresse de base programmable par logiciel (310) : et
lorsque les informations d'adresse définies par logiciel spécifient une pluralité d'adresses sélectionnées, les circuits de chargement/stockage d'entrée de table de traduction (300) sont configurés pour effectuer l'opération de chargement/stockage d'entrée de table de traduction pour chacune des adresses sélectionnées en réponse à une seule instance d'exécution de l'instruction de stockage agissant comme instruction de déclenchement de chargement/stockage d'entrée de table de traduction.

13. Appareil (2) selon l'une quelconque des revendications précédentes, dans lequel, pour au moins une variante de l'opération de chargement/stockage d'entrée de table de traduction, les informations d'adresse définies par logiciel spécifient une plage d'adresses, et les circuits de chargement/stockage d'entrée de table de traduction (300) sont configurés pour effectuer l'opération de chargement/stockage d'entrée de table de traduction pour chaque adresse dans la plage en tant qu'adresse sélectionnée.

14. Procédé comprenant les étapes suivantes :
traiter des instructions à l'aide de circuits de traitement (4) : et
effectuer une traduction, à l'aide de circuits de traduction d'adresses (28), entre un espace d'adresses d'entrée et un espace d'adresses de sortie sur la base d'informations de mappage d'adresses (56) obtenues à partir d'une structure de table de traduction comprenant des entrées de table de traduction ; et
en réponse au traitement par les circuits de traitement (4) d'une instruction de déclenchement de chargement/stockage d'entrée de table de traduction, effectuer une opération de chargement/stockage d'entrée de table de traduction pour au moins une adresse d'entrée de table de traduction cible sélectionnée en fonction d'informations d'adresse définies par logiciel identifiant une adresse sélectionnée dans l'espace d'adresses d'entrée, chaque adresse d'entrée de table de traduction cible comprenant une adresse d'une entrée de table de traduction feuille (52) fournissant les informations de mappage d'adresses (56) pour traduire l'adresse sélectionnée de l'espace d'adresses d'entrée vers l'espace d'adresses de sortie ou une adresse d'une entrée de table de traduction de branche (50) parcourue dans une opération de parcours de table de traduction pour obtenir l'entrée de table de traduction feuille (52 56) fournissant les informations de mappage d'adresses sélectionnées pour traduire l'adresse sélectionnée ;
où, pour au moins une variante de l'opération de chargement/stockage d'entrée de table de traduction, l'opération de chargement/stockage d'entrée de table de traduction supporte, pour une entrée de table de traduction cible donnée d'au moins une entrée de table de traduction cible correspondant à ladite au moins une adresse d'entrée de table de traduction cible, l'effacement des métadonnées de suivi d'accès (70, 72, 58) de l'entrée de table de traduction cible donnée d'un premier état à un deuxième état, le premier état indiquant qu'au moins un accès de chargement/stockage s'est produit à une région correspondante de l'espace d'adresses d'entrée et le deuxième état indiquant qu'aucun accès de chargement/stockage n'a eu lieu à la région correspondante de l'espace d'adresses d'entrée.

15. Programme informatique comprenant des instructions pour commander un appareil de traitement de données hôte (1330) afin de fournir un environnement d'exécution d'instructions pour exécuter un code cible (1300), le programme informatique comprenant des instructions qui, lorsqu'elles sont exécutées amènent :
une logique de programme de traduction d'adresses (1319) à effectuer une traduction entre un espace d'adresses d'entrée et un espace d'adresses de sortie sur la base d'informations de mappage d'adresses (56) obtenues à partir d'une structure de table de traduction comprenant des entrées de table de traduction ; et
une logique de programme de chargement/stockage d'entrée de table de traduction (1319) pour effectuer, en réponse à une instruction de déclenchement de chargement/stockage d'entrée de table de traduction du code cible (1300), une opération de chargement/stockage d'entrée de table de traduction pour au moins une adresse d'entrée de table de traduction cible sélectionnée en fonction d'informations d'adresse définies par logiciel identifiant une adresse sélectionnée dans l'espace d'adresses d'entrée, chaque adresse d'entrée de table de traduction cible comprenant une adresse d'une entrée de table de traduction feuille (52) fournissant les informations de mappage d'adresses (56) pour traduire l'adresse sélectionnée de l'espace d'adresses d'entrée vers l'espace d'adresses de sortie ou une adresse d'une entrée de table de traduction de branche (50) parcourue dans une opération de parcours de table de traduction pour obtenir l'entrée de table de traduction feuille (52) fournissant les informations de mappage d'adresses (56) pour traduire l'adresse sélectionnée ;
où, pour au moins une variante de l'opération de chargement/stockage d'entrée de table de traduction, l'opération de chargement/stockage d'entrée de table de traduction prend en charge, pour une entrée de table de traduction cible donnée,
au moins une entrée de table de traduction cible correspondant à ladite au moins une adresse d'entrée de table de traduction cible, l'effacement des métadonnées de suivi d'accès (70, 72, 58) de l'entrée de table de traduction cible donnée d'un premier état à un deuxième état, le premier état indiquant qu'au moins un accès de chargement/stockage s'est produit à une région correspondante de l'espace d'adresses d'entrée et le deuxième état indiquant qu'aucun accès de chargement/stockage n'a eu lieu à la région correspondante de l'espace d'adresses d'entrée.
